# EUROPEAN PATENT SPECIFICATION

(11) **EP 4 649 109 B1**
(45) Date of publication and mention of the grant of the patent: **28.10.2026**
(21) Application number: 24700732.1
(22) Date of filing: 10.01.2024
(51) Int. Cl.: C08L 53/02, C08L 25/14, C08L 33/12

(54) **IMPACT-MODIFIED BLENDS OF STYRENE-METHYL METHACRYLATE COPOLYMERS AND VINYLAROMATIC-OLEFINIC BLOCK COPOLYMERS**
SCHLAGZÄHMODIFIZIERTE MISCHUNGEN AUS STYROL-METHYLMETHACRYLAT-COPOLYMEREN UND VINYLAROMATISCHEN OLEFINBLOCKCOPOLYMEREN
MÉLANGES À RÉSISTANCE AUX CHOCS MODIFIÉE DE COPOLYMÈRES DE STYRÈNE-MÉTHACRYLATE DE MÉTHYLE ET DE COPOLYMÈRES SÉQUENCÉS VINYLAROMATIQUES-OLÉFINIQUES

(30) Priority: 11.01.2023 EP 23151091
(43) Date of publication of application: 19.11.2025
(73) Proprietor: INEOS Styrolution Group GmbH, 60325 Frankfurt (DE)
(72) Inventor: ROWLETT, Jarrett R., Oswego, Illinois 60543 (US); COCHRAN, Thomas W., Wilmington, Illinois 60481 (US)
(74) Representative: Jacobi, Markus Alexander
(86) International application number: PCT/EP2024/050507
(87) International publication number: WO 2024/149813

(56) References cited:
- WO-A1-2018/091513
- WO-A1-2023/179925
- JP-A- 2005 023 267
- US-A1- 2006 100 371

## Description

The invention relates to a molding composition comprising a styrene-methyl methacrylate copolymer (SMMA) and at least one vinylaromatic-olefinic block copolymer. These molding compositions and products therefrom have good mechanical properties and light stability while maintaining high clarity. The invention also relates to a process for the preparation of molding compositions and to thermoplastic molding compositions and shaped articles produced therefrom and to their use.

Styrene-ethylene/butylene block copolymers are known for years to provide effective modifiers to gain impact strength in blends with styrene-methyl methacrylate copolymers while still maintaining a good transparency and/or low haze.

JP 2005-023267 A (2005) discloses a resin composition comprising a copolymer mainly composed of styrene and methyl methacrylate and a styrene-ethylene/butylene-styrene copolymer, wherein the resin composition satisfies the relation -3 < 0.101 A - 0.121 B < 1, wherein the styrene content of the copolymer mainly composed of styrene and methyl methacrylate is A% by weight and the styrene content of the styrene copolymer is B% by weight.

JP 2002-234981 A discloses a resin composition comprising (a) 55 to 90 wt.-% of styrene-methyl methacrylate copolymer, (b) 10 to 45 wt.-% of high density polyethylene and (c) 5 to 20 parts by weight, based on 100 parts by weight of components (a) and (b), of an olefin-styrene block copolymer having a styrene content of ≥ 15 wt.-%.

It is an object of the present invention to provide a molding composition comprising styrene-methyl methacrylate copolymer (SMMA) and vinylaromatic-olefinic block copolymer with a good balance of stiffness and toughness, with a high light stability while maintaining a high transmittance and clarity. This combination of good mechanical and optical properties is desirable for many applications such as lighting and light covers blends as well as cap layers and protective covers, cap layers for sanitary applications, point of purchase displays, container holders, and display holders.

According to the invention, this object is achieved by providing a (thermoplastic) molding composition (P) according to the claims.

The invention relates to a molding composition (P) comprising (or consisting of) a blend of components (a), (b), (c) and (d):
(a) 30 to 95 wt.-% of a random copolymer component (a) comprising (or consisting of) at least one random copolymer (a-1) made from 30 to 70 wt.-% of at least one vinylaromatic monomer (a11), preferably styrene, and 30 to 70 wt.-%, methyl methacrylate (a12);
(b) 5 to 70 wt.-% of a block copolymer component (b) comprising (or consisting of) at least one block copolymer (b_{S1}), wherein the copolymer (b_{S1}) comprises:
   at least one hard block H, comprising repeating units of vinyl aromatic monomers, preferably styrene, and
   at least one random soft block S₁ comprising repeating units of at least one mono-functional olefinic monomer and at least one vinylaromatic monomer, preferably repeating units of ethylene, at least one mono-functional olefinic monomer having 3 to 10 carbon atoms, and styrene,
   wherein the repeating units of the mono-functional olefinic monomers and the vinyl aromatic monomers are statistically distributed within the random soft block S₁,
   and wherein the proportion of repeating units of the vinyl aromatic monomers - based on the entire block copolymer (b_{S1}) - is from 25 to 85 wt.-%;
(c) 0 to 2 wt.-% of at least one UV stabilizer component (c); and
(d) 0 to 2 wt.-% of one or more additive(s) and/or processing aid(s) as component (d), which are different from the components (a), (b) and (c);
wherein the total amount of components (a), (b), (c) and (d) is 100 wt.-%, and wherein the molding composition (P) has an un-notched Izod impact strength determined according to ASTM D4812 of greater than 250 J/m.

In this document, wt.-% means percent by weight.

Unless otherwise noted, mono-functional olefinic monomers according to the invention are mono-functional olefinic monomers having one terminal C-C double bond, i.e. a monomer of the general formula (Ia): 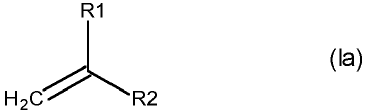 wherein
R1 is selected from hydrogen and saturated hydrocarbon groups comprising 1 to 10 carbon atoms, preferably hydrogen; and
R2 is selected from hydrogen and saturated hydrocarbon groups comprising 1 to 10 carbon atoms, preferably saturated hydrocarbon groups comprising 1 to 10 carbon atoms.

Diene monomers as disclosed herein (also referred to as dienes) are olefinic monomers having least two C-C double bonds, wherein at least one C-C double bond is a terminal C-C double bond and the second double bond is preferably an conjugated double bond, i.e. a monomer of the general formula (Ib): 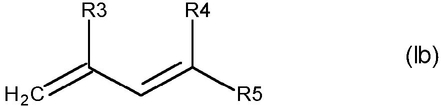 wherein
R3 is selected from hydrogen and saturated hydrocarbon groups comprising 1 to 10 carbon atoms, preferably selected from hydrogen and saturated hydrocarbon groups comprising 1 or 2 carbon atoms;
R4 is selected from hydrogen and saturated hydrocarbon groups comprising 1 to 10 carbon atoms, preferably selected from hydrogen and saturated hydrocarbon groups comprising 1 or 2 carbon atoms; and
R5 is selected from hydrogen and saturated hydrocarbon groups comprising 1 to 10 carbon atoms, preferably selected from hydrogen and saturated hydrocarbon groups comprising 1 to 3 carbon atoms.

According to the invention, the random copolymer (a) is a copolymer having a statistical distribution of the repeating units of the vinylaromatic monomer and methyl methacrylate.

### Molding composition (P)

According to the invention, the molding composition (P) comprises (or consists of) a blend of components (a), (b), (c) and (d):
(a) 30 to 95 wt.-%, preferably 40 to 90 wt.-%, often 50 to 85 wt.-%, for example 60 to 82 wt.- % or 65 to 81 wt.-%, of a random copolymer component (a) as defined herein;
(b) 5 to 70 wt.-%, preferably 10 to 60 wt.-%, often 15 to 50 wt.-%, for example 18 to 40 wt.- % or 19 to 35 wt.-%, of a block copolymer component (b) comprising (or consisting of) at least one block copolymer (b_{S1}) as defined herein;
(c) 0 to 2 wt.-% of at least one UV stabilizer component (c); and
(d) 0 to 2 wt.-% of one or more additive(s) and/or processing aid(s) as component (d), which are different from the components (a), (b) and (c);
wherein the total amount of components (a), (b), (c) and (d) is 100 wt.-%.

If component (c) is present, the minimum amount is usually 0.1 wt.-% for component (c).

If component (d) is present, the minimum amount is usually 0.1 wt.-% for component (d).

In one embodiment, the molding composition (P) comprises (or consists of) a blend of components (a), (b), (c) and (d):
(a) 30 to 94.9 wt.-%, preferably 40 to 89.9 wt.-%, often 50 to 84.9 wt.-%, for example 60 to 81.9 wt.-% or 65 to 80.9 wt.-%, of a random copolymer component (a) as defined herein;
(b) 5 to 69.9 wt.-%, preferably 10 to 59.9 wt.-%, often 15 to 49.9 wt.-%, for example 18 to 39.9 wt.-% or 19 to 34.9 wt.-%, of a block copolymer component (b) comprising (or consisting of) at least one block copolymer (b_{S1}) as defined herein;
(c) 0.1 to 2 wt.-% of at least one UV stabilizer component (c) as defined herein; and
(d) 0 to 2 wt.-% of one or more additive(s) and/or processing aid(s) as component (d) as defined herein;
wherein the total amount of components (a), (b), (c) and (d) is 100 wt.-%.

In one embodiment, the molding composition (P) comprises (or consists of) a blend of components (a), (b), (c) and (d):
(a) 30 to 94.9 wt.-%, preferably 40 to 89.9 wt.-%, often 50 to 84.9 wt.-%, for example 60 to 81.9 wt.-% or 65 to 80.9 wt.-%, of a random copolymer component (a) as defined herein;
(b) 5 to 69.9 wt.-%, preferably 10 to 59.9 wt.-%, often 15 to 49.9 wt.-%, for example 18 to 39.9 wt.-% or 19 to 34.9 wt.-%, of a block copolymer component (b) comprising (or consisting of) at least one block copolymer (b_{S1}) as defined herein;
(c) 0 to 2 wt.-% of at least one UV stabilizer component (c) as defined herein; and
(d) 0.1 to 2 wt.-% of one or more additive(s) and/or processing aid(s) as component (d) as defined herein;
wherein the total amount of components (a), (b), (c) and (d) is 100 wt.-%.

In one embodiment, the molding composition (P) comprises (or consists of) a blend of components (a), (b), (c) and (d):
(a) 30 to 94.8 wt.-%, preferably 40 to 89.8 wt.-%, often 50 to 84.8 wt.-%, for example 60 to 81.8 wt.-% or 65 to 80.8 wt.-%, of a random copolymer component (a) as defined herein;
(b) 5 to 69.8 wt.-%, preferably 10 to 59.8 wt.-%, often 15 to 49.8 wt.-%, for example 18 to 39.8 wt.-% or 19 to 34.8 wt.-%, of a block copolymer component (b) comprising (or consisting of) at least one block copolymer (b_{S1}) as defined herein;
(c) 0.1 to 2 wt.-% of at least one UV stabilizer component (c) as defined herein; and
(d) 0.1 to 2 wt.-% of one or more additive(s) and/or processing aid(s) as component (d) as defined herein;
wherein the total amount of components (a), (b), (c) and (d) is 100 wt.-%.

Preferred are molding compositions (P) wherein the values of the refractive index (at 589.3 nm) of components (a) and (b) are within the range of from 1.52 to 1.57. This results in a molding composition (P) of particular high clarity, high transmittance and low haze. In a preferred embodiment of the invention, the refractive index (at 589.3 nm) of the molding composition (P) is within the range of from 1.52 to 1.57, more preferably 1.53 to 1.56.

Unless otherwise mentioned, the refractive indices disclosed herein are at 589.3 nm and 23°C and determined analogously to ASTM C 1648-12 using the Metricon^{®} system described therein.

The random copolymer component (a) may comprise multiple random copolymers (e.g. components (a-1) and (a-2)) which are different from each other and for example differ in their chemical composition. Preferably, the random copolymer component (a) comprises only one random copolymer (i.e. the random copolymer component (a-1)).

The block copolymer component (b) may preferably comprise multiple block copolymers (e.g. components (b-1) and (b-2) as defined herein below) which are different from each other and for example differ in their chemical composition.

If multiple components (a) and/or components (b) (e.g. components (b-1) and (b-2) as defined herein below) are used, the refractive index (at 589.3 nm) of the mixture of all components (a) is preferably within the range of from 1.52 to 1.57 and the refractive index (at 589.3 nm) of the mixture of all components (b) is preferably within the range of from 1.52 to 1.57.

The at least one component (a) preferably has a refractive index (at 589.3 nm) within the range of from 1.52 to 1.57, more preferably in the range from 1.53 to 1.56, for example in the range from 1.54 to 1.56.

The at least one component (b-1) preferably has a refractive index (at 589.3 nm) within the range of from 1.52 to 1.57, more preferably in the range from 1.54 to 1.57, for example in the range from 1.55 to 1.57.

The at least one component (b-2) preferably has a refractive index (at 589.3 nm) within the range of from 1.52 to 1.57, more preferably in the range from 1.52 to 1.55, for example in the range from 1.525 to 1.545.

Preferred are molding compositions (P) wherein the values of the refractive index difference ΔRI (at 589.3 nm) of components (a) and (b) is ≤ 0.02, preferably ≤ 0.01, more preferably ≤ 0.008, often ≤ 0.007, for example ≤ 0.006 or ≤ 0.005. This results in a molding composition (P) of particular high transmittance, clarity and low haze. According to the invention, the refractive index difference ΔRI is calculated from the refractive indices of the individual components according to the following formula: $ΔRI = \left|RI\left(a\right)-RI\left(b\right)\right|$ with:
ΔRI = difference in refractive index RI,
RI(a) = refractive index of component(s) (a) at 589.3 nm,
RI(b) = refractive index of component(s) (b) at 589.3 nm.

For a composition comprising one component (a), having a refractive index RI(a), and one component (b), having a refractive index RI(b), the difference in refractive index ΔRI is therefore calculated as follows: $ΔRI = \left|RI\left(a\right)-RI\left(b\right)\right|$

For a composition comprising one component (a), having a refractive index RI(a), and two components (b) (i.e. one component (b₁), having a refractive index RI(b₁), and one further one component (b₂), having a refractive index RI(b₂)), the difference in refractive index ΔRI is calculated from the refractive indices of the individual components and the mass fractions of the components as follows: $ΔRI = \left|RI\left(a\right)-\left[\frac{\left[w\left({b}_{1}\right)∗RI\left({b}_{1}\right)\right] + \left[w\left({b}_{2}\right)∗RI\left({b}_{2}\right)\right]}{\left[w\left({b}_{1}\right)+w\left({b}_{2}\right)\right]}\right]\right|$ wherein:
w(b₁) = mass fraction of component (b₁),
w(b₂) = mass fraction of component (b₂)

For a composition comprising one component (a), having a refractive index RI(a), and multiple components (b) (i.e. components (b₁) to (bₘ), having a refractive indices RI(b₁) to RI(bₘ)), the difference in refractive index ΔRI is calculated from the refractive indices of the individual components and the mass fractions of the components as follows: $ΔRI = \left|RI\left(a\right)-\left[\frac{\left[w\left({b}_{1}\right)∗RI\left({b}_{1}\right)\right] + ⋯ + \left[w\left({b}_{m}\right)∗RI\left({b}_{m}\right)\right]}{\left[w\left({b}_{1}\right)+⋯+w\left({b}_{m}\right)\right]}\right]\right|$

If more than one random copolymer is used as component (a) is used (i.e. components (a₁) to (aₙ), having a refractive indices RI(a₁) to RI(aₙ)), the refractive index RI(a) of component (a) is calculated from the refractive indices of the individual components and the mass fractions of the components as follows: $RI \left(a\right) = \left[\frac{\left[w\left({a}_{1}\right)∗RI\left({a}_{1}\right)\right] + ⋯ + \left[w\left({a}_{n}\right)∗RI\left({a}_{n}\right)\right]}{\left[w\left({a}_{1}\right)+⋯+w\left({a}_{n}\right)\right]}\right]$ wherein:
w(a₁) = mass fraction of component (a₁),
w(aₙ) = mass fraction of component (aₙ).

As indicated herein below, the random copolymer component (a) may comprise the at least one random copolymer (a-1) made from 30 to 70 wt.-% vinylaromatic monomer (a11) and from 30 to 70 wt.-% of methyl methacrylate (a12) in combination with further random copolymers (in particular random copolymers comprising vinylaromatic repeating units such as further random copolymers of vinylaromatic monomers and methyl methacrylate or random copolymer of vinylaromatic monomers and acrylonitrile). However, typically, only one random copolymer is used as component (a). Molding compositions (P) comprising only one random copolymer as component (a) typically exhibit lower haze, i.e. only random copolymer component (a-1).

According to the invention, the molding composition (P) comprises (or preferably consists of) the at least one random copolymer component (a), the at least one block copolymer component (b), and the optional components (c) and/or (d) as defined herein. Thus, apart from the at least one random copolymer (a) and the at least one block copolymer (b), the molding composition (P) preferably comprises substantially no further polymer constituents, in particular no polymer constituents having a refractive index (at 589.3 nm) outside the range of from 1.52 to 1.57, since these polymer constituents significantly deteriorate the optical properties of the molding composition (P). This means that the molding composition (P) preferably comprises less than 1 wt.-%, more preferably less than 0.5 wt.-%, based on the total weight of the molding composition (P), of polymer constituents having a refractive index (at 589.3 nm) outside the range of from 1.52 to 1.57. Examples of undesired polymeric constituents include, but are not limited to, for example polyolefins (e.g. polyethene, polypropene or ethene-propene copolymers), polyamides, polycarbonates and poly(meth)acrylates.

However, the molding composition (P) may optionally comprise polymer constituents different from the at least one random copolymer (a-1) made from vinylaromatic monomers and of methyl methacrylate, and the at least one block copolymer (b), provided that these polymer constituents have a refractive index (at 589.3 nm) in the range of from 1.52 to 1.57. For example, the molding composition (P) may comprise a random copolymer of styrene and acrylonitrile (SAN) as component (a-2), preferably in an amount of less than 40 wt.-%, more preferably less than 30 wt.-%, based on the total weight of the molding composition (P).

Moreover, as indicated herein below, the polymer composition (P) may comprise polyolefin waxes having a weight average molecular weight of ≤ 20,000 g/mol as additive component (c) as demolding agents, typically in an amount of < 1 wt.-%, based on the total weight of the polymer composition (P). According to the invention, weight average molecular weight is determined by gel permeation chromatography (GPC) according to ASTM D3593 unless otherwise noted.

### Properties of the molding composition (P)

The molding composition (P) according to the invention and shaped articles produced therefrom show a good balance of stiffness and toughness, with a high light stability while maintaining a high transmittance and clarity. They can advantageously be used for many applications.

### Mechanical properties of the molding composition (P)

The molding compositions (P) according to the invention preferably have an un-notched Izod impact strength (determined according to ASTM 4812) of ≥ 250 J/m, often ≥ 350 J/m, for example ≥ 500 J/m. In some embodiments, the molding compositions (P) have an un-notched Izod impact strength (determined according to ASTM 4812) in the range of from 250 J/m to 2000 J/m, often in the range of from 350 J/m to 1500 J/m, for example in the range of from 500 J/m to 1300 J/m. Preferably, the un-notched Izod impact strength (determined according to ASTM 4812) of the molding composition (P) is increased by a factor of at least 2, preferably at least by a factor of 3, compared to the random copolymer component (a) in the absence of the block copolymer component(s) (b).

The molding compositions (P) according to the invention preferably have a notched Izod impact strength (determined according to ASTM D256) of ≥ 15 J/m, often ≥ 20 J/m, for example ≥ 25 J/m. In some embodiments, the molding compositions (P) have a notched Izod impact strength (determined according to ASTM D256) in the range of from 15 J/m to 70 J/m, often in the range of from 20 J/m to 60 J/m, for example in the range of from 25 J/m to 55 J/m.

The molding composition (P) according to the invention also exhibits improved mechanical properties as determined by its tensile energy to break, tensile strain at break, tensile stress at yield, modulus and Rockwell hardness.

The tensile energy to break determined according to ASTM D638-14 of the molding composition (P) according to the invention is typically more than 17 Nm, more preferably more than 20 Nm, often more than 25 Nm.

The tensile strain at break determined according to ASTM D638-14 of the molding composition (P) according to the invention is typically more than 10%, more preferably more than 15%, often more than 20%.

The Rockwell hardness determined according to ASTM D785 of the molding composition (P) according to the invention is typically in the range of from 80 to 110 R-scale.

The modulus determined according to ASTM D 638 for injection molded samples of the molding composition (P) according to the invention is typically in the range of from 1400 to 2200 MPa, often in the range of from 1500 to 2100 MPa.

The molding compositions (P) according to the invention preferably have a melt flow rate (MFR, determined according to ASTM D1238 at 200°C and 5 kg) of ≥ 3 g/10 min.

### Optical Properties of the molding composition (P)

The molding composition (P) according to the invention is characterized by preferably having a haze determined according to ASTM D1003 for injection molded plaques having a thickness of 3.2 mm (0.125 in) of less than 20%, more preferably less than or equal to 15%, often less than 10%, for example less than 8%.

Furthermore, the molding composition (P) according to the invention is characterized by preferably having a transmittance determined according to ASTM D1003 for injection molded plaques having a thickness of 3.2 mm (0.125 in) of more than 50%, more preferably more than 60%, often more than 70%, for example more than 80%.

Furthermore, the molding composition (P) according to the invention is characterized by preferably having a clarity determined according to ASTM D1003 for injection molded plaques having a thickness of 3.2 mm (0.125 in) of more than 95%, more preferably more than 98%, often more than 99%.

The molding composition (P) according to the invention further exhibits good light stability. In particular, the molding composition (P) according to the invention is characterized by having preferably less than 4 units of change in yellowness index (ΔYI) after UV stability testing with UV irradiation of 5000 kJ/m², more preferably less than 3, often less than 2, units of change in yellowness index (ΔYI), wherein the UV stability testing was conducted according to SAE 2527 through SAE 1960 with xenon irradiance (340 nm) of 0.55 W/m² at 70°C for light cycle and 38°C for dark cycle, and wherein the Yellowing Index was calculated according to ASTM E313 from measured CIELAB color space values. CIE color space values measured using a D65 light source (observation angle 10°) according to ASTM E1348.

Moreover, the molding composition (P) according to the invention is characterized by having preferably less than 4 units of color change (ΔE) after UV stability testing with UV irradiation of 5000 kJ/m², more preferably less than 3, often less than 2.5, units of color change (ΔE), wherein the UV stability testing was conducted according to SAE 2527 through SAE 1960 with xenon irradiance (340 nm) of 0.55 W/m² at 70°C for light cycle and 38°C for dark cycle, and wherein color change (ΔE) is calculated according to ASTM D2244 from measured CIELAB color space values, which are measured using a D65 light source (observation angle 10°) according to ASTM E1348.

### Application of the molding composition (P)

The molding compositions (P) according to the invention can advantageously be used for many applications, e.g. housewares, home appliances, such as lighting and light covers blends as well as cap layers and protective covers.

A further subject of the invention is the use of molding compositions (P) according to the invention and shaped articles produced therefrom for various applications for housewares, home appliances, such as lighting and light covers blends as well as cap layers and protective covers, cap layers for sanitary applications, point of purchase displays, container holders, display holders.

### Process for the preparation of the molding composition (P)

A further aspect of the invention is a process for the preparation of a molding composition (P) according to the invention by melt-mixing of components (a), (b) and, if appropriate, components (c) and/or (d). Preferably the melt-mixing of the components (a), (b) and, if appropriate, components (c) and/or (d) is performed in an extruder, preferably a twin screw extruder.

The melt-mixing may be performed, preferably in an extruder, at temperatures in the range of from 160 to 260°C. Preferably melt-mixing is performed in an extruder at temperatures in the range of from 180 to 230°C.

The molding composition (P) obtained by said process shows a good processability and thus can be easily processed, i.e. molded to any desired shape e.g. by extrusion and hot molding (e.g. injection molding). Accordingly a further aspect of the invention is a shaped article produced from the molding composition (P) according to the invention.

The components (a), (b), (c) and (d) are defined in further detail herein below.

### Component (a)

According to the invention, the molding composition (P) comprises 30 to 95 wt.-% of a random copolymer component (a). The random copolymer component (a) comprises (or consists of) at least one (preferably one) random copolymer (a-1) made from 30 to 70 wt.-% vinylaromatic monomer (a11), in particular styrene, and from 30 to 70 wt.-% of methyl methacrylate (a12); more preferred is a random copolymer (a-1) made from 40 to 65 wt.-%, more preferably 45 to 63 wt.-%, further more preferably 48 to 60 wt.-%, and often 50 to 58 wt.-%, of vinylaromatic monomer (a11) and from 35 to 60 wt.-%, more preferably 37 to 55 wt.-%, further more preferably 40 to 52 wt.-%, and often 42 to 50 wt.-%, of methyl methacrylate (a12). In said compositions the total amount of (a11) and (a12) is 100 wt.-% and the vinylaromatic monomer (a11) and the methyl methacrylate (a12) are statistically distributed in the random copolymer (a-1).

Styrene-methyl methacrylate (SMMA) copolymers (a) may be obtained in a known manner by bulk, solution, suspension, precipitation or emulsion polymerization. Details of these processes are described, for example, in Kunststoffhandbuch, ed. R. Vieweg and G. Daumiller, Vol. V "Polystyrol", Carl-Hanser-Verlag Munich, 1969, p. 118 ff. SMMA copolymers (a) are known products which are commercially available e.g. from Ineos Styrolution (Frankfurt, Germany).

Additionally, the random copolymer component (a) may comprise one or more random copolymer(s) different from the vinylaromatic-methyl methacrylate copolymers described herein (e.g. SMMA), for example a random copolymer of styrene and acrylonitrile (SAN) as component (a-2), preferably in an amount of less than 40 wt.-%, often less than 30 wt.-%, based on the total weight of the random copolymer component (a). However, in order to obtain a molding composition (P) with a low haze, it is often advantageous to use only one random copolymer as random copolymer component (a).

### Component (b)

According to the invention, the molding composition (P) comprises 5 to 70 wt.-% of a block copolymer component (b) comprising (or consisting of) at least one block copolymer (b_{S1}).

The at least one block copolymer (b_{S1}) is defined as a random block copolymer comprising:
at least one hard block H, comprising repeating units of vinyl aromatic monomers, and
at least one random soft block S₁ comprising repeating units of at least one mono-functional olefinic monomer and at least one vinylaromatic monomer,
wherein the repeating units of the mono-functional olefinic monomers and the vinyl aromatic monomers are statistically distributed within the random soft block S₁, and
wherein the proportion of repeating units of the vinyl aromatic monomers - based on the entire block copolymer (b_{S1}) - is from 25 to 85 wt.-%, preferably from 30 to 85 wt.-%, often from 35 to 85 wt.-%.

In addition to the at least one block copolymer (b_{S1}), the block copolymer component (b) may comprise one or more block copolymers (b_{S2}), which comprise soft blocks S₂ that are substantially free of repeating units of vinyl aromatic monomers.

The term "substantially free of repeating units of vinyl aromatic monomers" according to the invention refers to soft blocks S₂ comprising less than or equal to 5 wt.-%, preferably less than or equal to 1 wt.-%, of repeating units of vinyl aromatic monomers, based on the total weight of the soft blocks S₂.

Said block copolymers (b_{S2}) may comprise (or consist of):
at least one hard block H, comprising repeating units of vinyl aromatic monomers, in particular styrene, and
at least one soft block S₂ comprising repeating units of mono-functional olefinic monomers, in particular repeating units of ethylene and at least one mono-functional olefinic monomer having 3 to 10 carbon atoms,
wherein the soft block S₂ is substantially free of repeating units of vinyl aromatic monomers, and
wherein the proportion of the repeating units of vinyl aromatic monomers - based on the entire block copolymer (b_{S2}) - is from 25 to 85 wt.-%, preferably from 30 to 85 wt.-%, often from 35 to 85 wt.-%.

In one embodiment of the invention, the block copolymer component (b) comprises (or consists of):
(b_{S1}) 50 to 100 wt.-%, preferably 65 to 100 wt.-%, for example 70 to 100 wt.-%, based on the total weight of component (b), of the at least one block copolymer (b_{S1}); and
(b_{S2}) 0 to 50 wt.-%, preferably 0 to 35 wt.-%, for example 0 to 30 wt.-%, based on the total weight of component (b), of the at least one block copolymer (b_{S2}),
and wherein the total amount of components (b_{S1}) and (b_{S2}) is 100 wt.-%.

In one embodiment of the invention, the block copolymer component (b) comprises (or consists of) 100 wt.-%, based on the total weight of component (b), of the at least one block copolymer (b_{S1}).

It has been found that the composition of the soft block, in particular the presence of repeating units of vinyl aromatic monomers in a random distribution within the soft block S₁ is relevant for the improvement of the mechanical properties of the molding composition (P), in particular for the improvement of un-notched Izod impact strength determined according to determined according to ASTM D4812.

It has further been found advantageous for the optical properties of the molding composition (P) if the block copolymer component (b) comprises (or consists of) at least a first block copolymer (b-1) and a second block copolymer (b-2), wherein the first block copolymer (b-1) and the second block copolymer (b-2) differ in the total amount of repeating units of vinylaromatic monomers in the entire first block copolymer (b-1) and the entire second block copolymer (b-2), respectively. Preferably, the block copolymer component (b) comprises at least one block copolymer (b-1) having a proportion of the repeating units of vinyl aromatic monomers - based on the entire block copolymer (b-1) - of from 60 to 85 wt.-%, more preferably from 62 to 85 wt.-%, often from 65 to 85 wt.-%; and at least one block copolymer (b-2) having a proportion of the vinyl aromatic monomers - based on the entire block copolymer (b-2) - of from 25 to 59 wt.-%, preferably from 30 to 59 wt.-%, often from 35 to 59 wt.-%.

According to one embodiment of the invention, the block copolymer component (b) may comprise (or consist of) at least one block copolymer (b_{S1}-1) as block copolymer (b_{S1}) which comprises:
at least one hard block H, comprising repeating units of vinyl aromatic monomers, and
at least one soft block S₁ comprising repeating units of at least one mono-functional olefinic monomer and at least one vinylaromatic monomer,
wherein the repeating units of the mono-functional olefinic monomers and the vinyl aromatic monomers are statistically distributed within the random soft block S₁, and
wherein the proportion of the repeating units of vinyl aromatic monomers - based on the entire block copolymer (b_{S1}-1) - is from 60 to 85 wt.-%, preferably from 62 to 85 wt.-%, often from 65 to 85 wt.-%.

According to one embodiment of the invention, the block copolymer component (b) may comprise (or consist of) at least one block copolymer (b_{S1}-2) as block copolymer (b_{S1}) which comprises:
at least one hard blocks H, comprising repeating units of vinyl aromatic monomers, and
at least one soft block S₁ comprising repeating units of at least one mono-functional olefinic monomer and at least one vinylaromatic monomer,
wherein the repeating units of the mono-functional olefinic monomers and the vinyl aromatic monomers are statistically distributed within the random soft block S₁, and
wherein the proportion of the vinyl aromatic monomers - based on the entire block copolymer (b_{S1}-2) - is 25 to 59 wt.-%, preferably from 30 to 59 wt.-%, often from 35 to 59 wt.-%.

According to one embodiment of the invention, the block copolymer component (b) may comprise (or consist of) at least one block copolymer (b_{S1}-1) and at least one block copolymer (b_{S1}-2) as defined herein as block copolymer (b_{S1}).

According to one embodiment of the invention, the block copolymer component (b) may comprise (or consist of) at least one block copolymer (b_{S1}-1) and/or at least one block copolymer (b_{S1}-2) and at least one block copolymer (b_{S2}) as defined herein, i.e. at least one block copolymer (b_{S1}-1) and at least one block copolymer (b_{S2}), or at least one block copolymer (b_{S1}-2) and at least one block copolymer (b_{S2}), or at least one block copolymer (b_{S1}-1) and at least one block copolymer (b_{S1}-2) and at least one block copolymer (b_{S2}).

According to one embodiment of the invention, the block copolymer component (b) may comprise - in addition to the at least one block copolymer (b_{S1}) - at least one block copolymer (b_{S2}-1) which comprises:
at least one hard block H, comprising repeating units of vinyl aromatic monomers, and
at least one soft block S₂ comprising repeating units of mono-functional olefinic monomers,
wherein the soft block S₂ is substantially free of repeating units of vinyl aromatic monomers,
and wherein the proportion of the repeating units of vinyl aromatic monomers - based on the entire block copolymer (b_{S2}-1) - is from 60 to 85 wt.-%, preferably from 62 to 85 wt.-%, often from 65 to 85 wt.-%.

According to one embodiment of the invention, the block copolymer component (b) may comprise - in addition to the at least one block copolymer (b_{S1}) - at least one block copolymer (b_{S2}-2) which comprises:
at least one hard block H, comprising repeating units of vinyl aromatic monomers, and
at least one soft block S₂ comprising repeating units of mono-functional olefinic monomers,
wherein the soft block S₂ is substantially free of repeating units of vinyl aromatic monomers,
and wherein the proportion of the repeating units of vinyl aromatic monomers - based on the entire block copolymer (b_{S2}-2) - is from 25 to 59 wt.-%, preferably from 30 to 59 wt.-%, often from 35 to 59 wt.-%.

According to one embodiment of the invention, the block copolymer component (b) may comprise (or consist of) - in addition to the at least one block copolymer (b_{S1}) - at least one block copolymer (b_{S2}-1) and at least one block copolymer (b_{S2}-2) as defined herein above.

As discussed before, the block copolymer component (b) preferably comprises (or consist of) least one block copolymer (b-1) having a proportion of the repeating units of vinyl aromatic monomers - based on the entire block copolymer (b-1) - of from 60 to 85 wt.-%, and at least one block copolymer (b-2) having a proportion of the vinyl aromatic monomers - based on the entire block copolymer (b-2) - of from 25 to 59 wt.-%. Accordingly, the block copolymer component (b) preferably comprises (or consists of):
(i) at least one block copolymer (b_{S1}-1) and at least one block copolymer (b_{S1}-2); or
(ii) at least one block copolymer (b_{S1}-1) and at least one block copolymer (b_{S2}-2); or
(iii) at least one block copolymer (b_{S1}-2) and at least one block copolymer (b_{S2}-1); or
(iv) at least one block copolymer (b_{S1}-1), at least one block copolymer (b_{S1}-2), and at least one block copolymer (b_{S2}-1); or
(v) at least one block copolymer (b_{S1}-1), at least one block copolymer (b_{S1}-2), and at least one block copolymer (b_{S2}-2); or
(vi) at least one block copolymer (b_{S1}-1), at least one block copolymer (b_{S2}-1), and at least one block copolymer (b_{S2}-2); or
(vii) at least one block copolymer (b_{S1}-2), at least one block copolymer (b_{S2}-1), and at least one block copolymer (b_{S2}-2);
wherein (b_{S1}-1), (b_{S1}-2), (b_{S2}-1) and (b_{S2}-2) are as defined herein above.

Particular preferably, the block copolymer component (b) comprises (or consists of):
(i) at least one block copolymer (b_{S1}-1) and at least one block copolymer (b_{S1}-2); or
(iii) at least one block copolymer (b_{S1}-2) and at least one block copolymer (b_{S2}-1); or
(iv) at least one block copolymer (b_{S1}-1), at least one block copolymer (b_{S1}-2), and at least one block copolymer (b_{S2}-1);
wherein (b_{S1}-1), (b_{S1}-2), and (b_{S2}-1) are as defined herein above.

In one embodiment, the block copolymer component (b) comprises (or consists of):

| | |
|---|---|
| (b_{S1}-1) | 50 to 95 wt.-%, preferably 55 to 90 wt.-%, for example 60 to 80 wt.-%, based on the total weight of component (b), of the at least one block copolymer (b_{S1}-1); and |
| (b_{S1}-2) | 5 to 50 wt.-%, preferably 10 to 45 wt.-%, for example 20 to 40 wt.-%, based on the total weight of component (b), of the at least one block copolymer (b_{S1}-2); |

wherein the total amount of components (b_{S1}-1) and (b_{S1}-2) is 100 wt.-%,
and wherein (b_{S1}-1) and (b_{S1}-2) are as defined herein above.

In one embodiment, the block copolymer component (b) comprises (or consists of):

| | |
|---|---|
| (b_{S1}-1) | 30 to 70 wt.-%, preferably 40 to 60 wt.-%, for example 45 to 55 wt.-%, based on the total weight of component (b), of the at least one block copolymer (b_{S1}-1); |
| (b_{S1}-2) | 15 to 35 wt.-%, preferably 20 to 30 wt.-%, for example 22.5 to 27.5 wt.-%, based on the total weight of component (b), of the at least one block copolymer (b_{S1}-2); and |
| (b_{S2}-1) | 15 to 35 wt.-%, preferably 20 to 30 wt.-%, for example 22.5 to 27.5 wt.-%, based on the total weight of component (b), of the at least one block copolymer (b_{S2}-1); |

wherein the total amount of components (b_{S1}-1), (b_{S1}-2) and (b_{S2}-1) is 100 wt.-%,
and wherein (b_{S1}-1), (b_{S1}-2), and (b_{S2}-1) are as defined herein above.

Each of the components (b) designated as (b_{S1}), (b_{S2}), (b-1), (b-2), (b_{S1}-1), (b_{S1}-2), (b_{S2}-1) and (b_{S2}-2) comprises at least one hard block H and at least one soft block S₁ or at least one soft block S₂.

The at least one hard block H of all block copolymer components (b) comprises repeating units of vinyl aromatic monomers. Vinyl aromatic monomers which may constitute repeating units of the hard block(s) H of component (b) are preferably selected from styrene, α-methylstyrene, p-methylstyrene, ethylstyrene, tert-butylstyrene, vinyl toluene or mixtures of these. Most preferably, the vinyl aromatic monomer is styrene.

The hard block(s) H of all block copolymer components (b) may comprise from 95 to 100 wt.- %, for example 99 to 100 wt.-%, based on the total weigh of the hard block H, of repeating units of at least one vinylaromatic monomer and from 0 to 5 wt.-%, for example 0 to 1 wt.-%, based on the total weigh of the hard block H, of repeating units of at least one mono-functional olefinic monomer. Preferably the hard blocks H are homopolymers comprising repeating units from vinylaromatic monomers, in particular styrene.

The at least one soft block S₁ of all block copolymer components (b_{S1}) comprising said soft block S₁ is a random copolymer comprising repeating units of at least one mono-functional olefinic monomer and at least one vinylaromatic monomer. Suitable vinylaromatic monomers are identical to the vinyl aromatic monomers suitable for the hard block H as defined herein above. Often, the soft block S1 and the hard block H of a block copolymer component (b_{S1}) comprise repeating units of the same vinyl aromatic monomer(s). Suitable mono-functional olefinic monomers that may constitute repeating units of the at least one soft block S₁ of component(s) (b_{S1}) are mono-functional olefinic monomers of formula (la) and may preferably be selected from ethylene, and at least one mono-functional olefinic monomer having 3 to 10 carbon atoms, such as propene, 1-butene, 2-methylpropene, 1-pentene, 1-hexene, vinylcyclohexane or mixtures of these, preferably ethylene and propene or ethylene and 1-butene, in particular ethylene and 1-butene.

The soft block S₁ is a random block copolymer. The term "random block copolymer" is defined as a copolymer block having a statistical distribution of the repeating units of the vinylaromatic monomers and mono-functional olefinic monomers.

The at least one soft block S₂ of all block copolymer components (b_{S2}) comprising said soft block S₂ is a polymer comprising repeating units of at least one mono-functional olefinic monomer. Suitable mono-functional olefinic monomers that may constitute repeating units of the at least one soft block S₂ of component(s) (b_{S2}) are mono-functional olefinic monomers of formula (la) and may preferably be selected from ethylene, and at least one mono-functional olefinic monomer having 3 to 10 carbon atoms, such as propene, 1-butene, 2-methylpropene, 1-pentene, 1-hexene, vinylcyclohexane or mixtures of these, preferably ethylene and propene or ethylene and 1-butene, in particular ethylene and 1-butene.

The soft block(s) S₁ and/or soft block(s) S₂ may additionally comprise repeating units of diene monomers such as 1,3-butadiene, isoprene, 2,3-dimethylbutadiene, 1,3-pentadiene, or 1,3-hexadienes or mixtures of these, preferably 1,3-butadiene and isoprene, in particular 1,3-butadiene. The amount of repeating units of diene monomers is preferably ≤ 10 wt.-%, more preferably ≤ 5 wt.-%, based on the soft block(s) S₁ and/or soft block(s) S₂, respectively. These repeating units of diene monomers may remain as residues of an incomplete hydrogenation of the vinylaromatic-diene block copolymer (b') described herein below during the preparation of the vinylaromatic-olefinic block copolymer (b).

The random soft block S₁ may comprise from 1 to 80 wt.-%, preferably 3 to 75 wt.-%, for example 5 to 70 wt.-%, of repeating units of vinylaromatic monomers, in particular styrene, and from 20 to 99 wt.-%, preferably 25 to 97 wt.-%, for example 30 to 95 wt.-%, of repeating units of mono-functional olefinic monomers (and optionally repeating units of diene monomers), preferably ethylene and at least one further mono-functional olefinic monomer having 3 to 10 carbon atoms, wherein the total amount of the repeating units of vinyl aromatic monomers and mono-functional olefinic monomers is 100 wt.-%.

The at least one soft block S₂ of component(s) (b_{S2}) is substantially free of repeating units of vinyl aromatic monomers and typically may comprises from 95 to 100 wt.-%, preferably 99 to 100 wt.-%, of repeating units of at least one mono-functional olefinic monomer (and optionally repeating units of diene monomers) and from 0 to 5 wt.-%, preferably 0 to 1 wt.-%, of repeating units of at least one vinylaromatic monomer. Preferably the soft block S₂ is a copolymer of repeating units of at least one mono-functional olefinic monomer, preferably ethylene and at least one further mono-functional olefinic monomer having 3 to 10 carbon atoms, and comprises no repeating units of vinylaromatic monomers.

Generally - based on the entire block copolymer components (b) - the proportion of the repeating units of vinylaromatic monomers is from 25 to 85 wt.-%, preferably 30 to 85 wt.-%, for example 35 to 85 wt.-%, and the proportion of the repeating units of mono-functional olefinic monomers is from 15 to 75 wt.-%, preferably 15 to 70 wt.-%, for example 15 to 65 wt.-%.

Each of the components (b) designated as (b_{S1}), (b_{S2}), (b-1), (b-2), (b_{S1}-1), (b_{S1}-2), (b_{S2}-1) and (b_{S2}-2) may be linear or star-shaped block copolymers.

Preferably, block copolymers designated as (b_{S1}), (b_{S2}), (b-1), (b-2), (b_{S1}-1), (b_{S1}-2), (b_{S2}-1) and (b_{S2}-2) are linear block copolymers with one or more hard blocks H, preferably terminal hard blocks H, and at least one soft block S₁ and/or at least one soft block S₂, respectively.

According to one embodiment, block copolymers (b) designated as (b_{S1}), (b_{S1}-1), and (b_{S1}-2) are (preferably linear) block copolymers of the structure H-S₁, in particular a styrene-ethylene/butylene block copolymer of the structure H-S₁.

According to one embodiment, block copolymer (b) designated as (b_{S2}), (b_{S2}-1), and (b_{S2}-2) are (preferably linear) block copolymers of the structure H-S₂, in particular a styrene-ethylene/butylene block copolymer of the structure H-S₂.

According to one embodiment, block copolymers (b) designated as (b_{S1}), (b_{S1}-1), and (b_{S1}-2) are (preferably linear) block copolymers of the structure H-S₁-H in particular a styrene-ethylene/butylene block copolymer of the structure H-S₁-H

According to an alternative embodiment, block copolymer (b) designated as (b_{S2}), (b_{S2}-1), and (b_{S2}-2) are (preferably linear) block copolymers of the structure H-S₂-H, in particular a styrene-ethylene/butylene block copolymer of the structure H-S₂-H.

Preferably, the block copolymer (b_{S1}), the block copolymer (b_{S1}-1) and the block copolymer (b_{S1}-2) is a linear block copolymer with two terminal hard blocks H and one central soft block S₁, respectively. Preferably, the block copolymer (b_{S2}), the block copolymer (b_{S2}-1) and the block copolymer (b_{S2}-2) is a linear block copolymer with two terminal hard blocks H and one central soft block S₂, respectively.

The block copolymers constituting component (b) are preferably obtained by preparing respective block copolymers (b') comprising at least one hard block H' made from at least one vinylaromatic monomer, and at least one soft block S₁' made from diene monomers (also referred to as dienes) and vinylaromatic monomers and/ or at least one soft block S₂' made from diene monomers, wherein the non-conjugated double bonds of vinylaromatic-diene block copolymers (b') are subsequently hydrogenated in order to obtain the respective block copolymer component (b).

Typically, the block copolymer components (b) are prepared by hydrogenating vinylaromatic-diene block copolymer components (b'), wherein preferably at least 90 % of the non-conjugated double bonds are hydrogenated, more preferably at least 95 %.

Suitable vinyl aromatic monomers which may be used for the preparation of the hard blocks H' or else for the soft block S₁' of the vinylaromatic-diene block copolymer (b') are as defined herein above (i.e. styrene, α-methylstyrene, p-methylstyrene, ethylstyrene, tert-butylstyrene, vinyl toluene or mixtures of these, preferably styrene).

Suitable dienes which may be used for the preparation of the soft blocks S₁' and/or S₂' of the vinylaromatic-diene block copolymer (b') are conjugated dienes, preferably conjugated dienes of formula (Ib) described herein above. Preferred dienes for the preparation of the soft blocks S₁' and/or S₂' (or optionally for the hard blocks H') are 1,3-butadiene, isoprene, 2,3-dimethylbutadiene, 1,3-pentadiene, or 1,3-hexadienes or mixtures of these, more preferably 1,3-butadiene and isoprene, in particular 1,3-butadiene.

The block vinylaromatic-diene block copolymers (b') are preferably prepared by sequential anionic polymerization. The block copolymers (b) are prepared preferably by hydrogenation of the non-conjugated double bonds of the block copolymers (b'), i.e. double bonds predominantly present in the soft block S₁' or the soft block S₂' of the block copolymers (b'). Hydrogenation may for example be effected by the reaction of block copolymers (b') with hydrogen in the presence of suitable catalysts. The block copolymers (b) as well as the block copolymers (b') are known. The preparation of block copolymer (b') is described for example in "Modern Styrenic Polymers: Polystyrenes and Styrenic Copolymers" (Eds., J. Scheirs, D. Priddy, Wiley, Chichester, UK, (2003), pages 502 to 507) and in particular in US 6,521,712 (col. 2, I. 52 to col. 4, line 2). The preparation of block copolymer (b) by hydrogenation of block copolymers is described for example in US 2015/0031835 A1.

### Component (c)

The thermoplastic molding composition (P) may optionally comprise up to 2.0 wt.-%, preferably 0.1 to 2 wt.-%, of at least one UV stabilizer component (c).

Examples of UV-stabilizers are various substituted resorcinols, salicylates, benzophenones, benzotriazoles, triazines and HALS (hindered amine light stabilizers), for example those commercially available as Tinuvin^{®}, which are generally used in amounts of up to 1.7 wt.-%, based on the molding composition (P).

### Component (d)

The thermoplastic molding composition (P) may optionally comprise up to 2.0 wt.-%, preferably 0.1 to 2 wt.-%, of one or more additive(s) and/or processing aid(s) as component (d). The additive(s) and/or processing aid(s) of component (d) are different from components (a), (b) and (c).

Suitable additives and/or processing aids (d) include all substances customarily employed for processing or finishing the polymers, except of fillers/fibers and pigments (see e.g. "Plastics Additives Handbook", Hans Zweifel, 6th edition, Hanser Publ., Munich, 2009).

Preferred additives and/or processing aids (d) are such as oxidation retarders, anti-oxidants, agents to counter thermal decomposition, lubricants and dyes.

These additives and/or processing aids (d) may be admixed at any stage of the manufacturing operation, but preferably at an early stage in order to profit early on from the stabilizing effects (or other specific effects) of the added substance.

Suitable antioxidants are, e.g., one or more compounds selected from mono-phosphite-based antioxidants, di-phosphite-based antioxidants and sterically hindered phenolic antioxidants. If one or more antioxidants are present, they are preferably selected from mono-phosphite-based antioxidants, such as tri-substituted mono-phosphite derivatives, di-phosphite-based antioxidants, such as substituted pentaerythritol di-phosphite derivatives and sterically hindered phenolic antioxidants, such as 2,6-di-tertbutylphenolic derivatives.

Suitable lubricants/glidants and demolding agents include stearic acids, stearyl alcohol, stearic esters, amide waxes (bis-stearylamide, in particular ethylene bis-stearamide), polyolefin waxes having a weight average molecular weight of ≤ 20,000 g/mol and/or generally higher fatty acids, derivatives thereof and corresponding fatty acid mixtures comprising 12 to 30 carbon atoms.

Suitable dyes are any of the dyes which can be used for the transparent, semitransparent, or non-transparent coloring of polymers, in particular those dyes which are suitable for coloring styrene copolymers. Dyes of this type are known to the skilled worker. Preferred are dyes which can be used for the transparent coloring of polymers.

Examples of oxidation retarders and heat stabilizers are halides of the metals from group I of the periodic table, examples being sodium, potassium and/or lithium halides, optionally in combination with copper (I) halides, e.g., chlorides, bromides, iodides, sterically hindered phenols, hydroquinones, different substituted representatives of these groups, and mixtures thereof, in concentrations of up to 1 wt.-%, based on the weight of the molding composition (P).

The examples, figures and the patent claims further illustrate the invention.

### Examples

### Test methods:

Melt flow rate (MFR) was determined according to ASTM D1238 at 200 °C and 5 kg.

Notched Izod impact strength was determined in accordance with ASTM D256.

Un-notched Izod impact strength was determined in accordance with ASTM 4812.

Modulus was determined according to ASTM D 638 for injection molded samples.

Tensile stress at yield, tensile strain at break and tensile energy to break were determined in the test according to norm ASTM D638.

Rockwell hardness was determined according to ASTM D785.

Refractive index at 589.3 nm and 23°C was determined analogously to ASTM C 1648-12 using a Metricon^{®} Model 2010/M Prism Coupler (particular reference is made to section 9.4 of ASTM C 1648-12). The difference in refractive index ΔRI between the refractive index of the random copolymer(s) (a) and the block copolymer(s) (b) is calculated according to the following formula: $ΔRI = \left|RI\left(a\right)-\left[\frac{\left[w\left({b}_{1}\right)∗RI\left({b}_{1}\right)\right] + \left[w\left({b}_{2}\right)∗RI\left({b}_{2}\right)\right] + \left[w\left({b}_{3}\right)∗RI\left({b}_{3}\right)\right]}{\left[w\left({b}_{1}\right)+w\left({b}_{2}\right)+w\left({b}_{3}\right)\right]}\right]\right|$ with b₁ = SEBS-1, b₂ = SEBS-2, and b₃ = SEBS-3 (reference is made to the starting materials and composition details described below).

Optical properties (haze, transmittance, and clarity) were determined in accordance with ASTM D1003 for 3.2 mm (0.125 inch) thickness specimen.

UV stability testing was conducted according to SAE 2527 through SAE 1960 with xenon irradiance (340 nm) of 0.55 W/m² at 70°C for light cycle and 38°C for dark cycle.

Yellowness Index (YI) was calculated according to ASTM E313 from measured CIELAB color space values. CIE color space values measured using a D65 light source (observation angle 10°) according to ASTM E1348.

Color Change (ΔE) was calculated according to ASTM D2244 from measured CIELAB color space values. CIE color space values measured using a D65 light source (observation angle 10°) according to ASTM E1348.

### Starting materials:

| | |
|---|---|
| SMMA (a) | random styrene/methyl methacrylate-copolymer, MMA content: 45 wt.-%; refractive index at 589.3 nm of 1.549. |
| SEBS-1 (b₁) | styrene block (ethylene/butylene) block styrene copolymer having a S/EB ratio of 67/33; refractive index at 589.3 nm of 1.551. |
| SEBS-2 (b₂) | styrene block (ethylene/butylene/styrene) block styrene copolymer having a S/EB ratio of about 77/23, wherein the repeating units of the (ethylene/butylene/styrene) block are statistically distributed; refractive index at 589.3 nm of 1.558. |
| SEBS-3 (b₃) | styrene block (ethylene/butylene/styrene) block styrene copolymer having a S/EB ratio of about 53/47, wherein the repeating units of the (ethylene/butylene/styrene) block are statistically distributed; refractive index at 589.3 nm of 1.536. |
| SBS (Reference) | Styrene block butadiene block styrene copolymer having a S/B ratio of 43/57; refractive index at 589.3 nm of 1.551. |
| UV Package | mixture of commercial UV stabilizers comprising hindered amine light stabilizers, hydroxyphenyl benzotriazole light stabilizers and hydroxyphenyl triazine light stabilizers. |

The materials as shown in Tables 1 to 5 were melt-mixed using a 30 mm twin screw extruder with zone temperatures set from 180 to 230°C. From the obtained molding compositions (P) specimens were injection molded and the parts tested for their mechanical and optical properties. Tables 1 to 5 show mechanical and optical properties of the injection molded specimens for Reference example 1, Comparative Examples 1 to 3 and 27 as well as inventive examples 4 to 26.

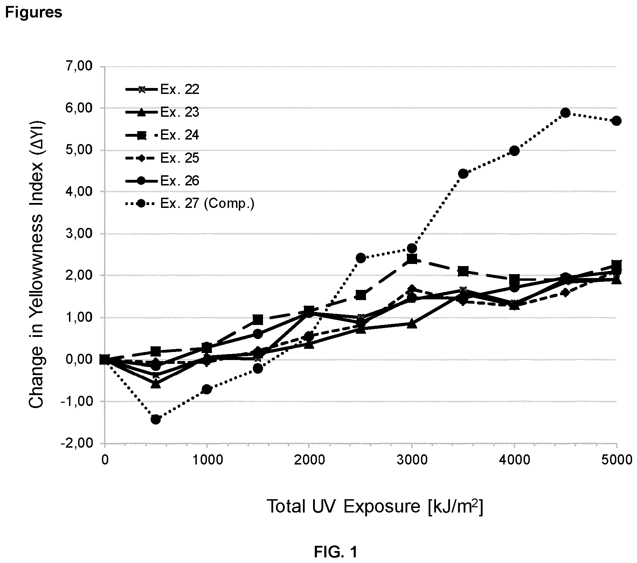

Figure 1 depicts the change in Yellowness index (ΔYI) via UV exposure (kJ/m²) via SAE 2527 through SAE 1960 with xenon irradiance (340 nm) of 0.55 W/m² at 70°C for light cycle and 38°C for dark cycle for Examples 22 to 26 and Comparative Example 27.

Figure 2 depicts the change in color (ΔE) via UV exposure (kJ/m²) via SAE 2527 through SAE 1960 with xenon irradiance (340 nm) of 0.55 W/m² at 70°C for light cycle and 38°C for dark cycle for Examples 22 to 26 and Comparative Example 27.

Figure 3 visualizes the correlation between difference in refractive index (ΔRI) (at 589.3 nm and 23°C determined analogously to ASTM C 1648-12 and calculated as described above) and haze (determined according to ASTM D1003 for specimen of 3.2 mm thickness).

**Table 1. Comparative Examples 1 to 3 and Reference Example 1.**

| | Units | Ex. 1 (Comparative) | Ex. 2 (Comparative) | Ex. 3 (Comparative) | Ref. 1 (Comparative) |
|---|---|---|---|---|---|
| SMMA | % | 80 | 70 | 50 | 100 |
| SEBS-1 | % | 20 | 30 | 50 | 0 |
| SEBS-2 | % | 0 | 0 | 0 | 0 |
| SEBS-3 | % | 0 | 0 | 0 | 0 |

| Mechanical Properties | | | | | |
|---|---|---|---|---|---|
| MFR (200 °C, 5.0 kg) | g/10 min | 5 | 6.4 | 7.3 | 2 |
| Notched Izod impact strength | J/m (ft-lb/in) | 11 (0.21) | 11 (0.2) | 14 (0.26) | --- |
| Un-notched Izod impact strength | J/m (ft-lb/in) | 155 (2.9) | 160 (3) | 224 (4.2) | 160 (3) |
| Modulus | MPa (kpsi) | 2427 (352) | 2275 (330) | 1882 (273) | --- |
| Tensile stress at yield | MPa (psi) | 52.1 (7555) | 47.6 (6905) | 42.5 (6162) | 59.8 (8671) |
| Tensile strain at break | % | 3.4 | 3.4 | 3.7 | 3 |
| Tensile energy to break | Nm (in-lbf) | 4.6 (41) | 4.4 (39) | 4.2 (37) | 5.3 (47) |
| Rockwell hardness | R Scale | 109 | 103 | 90 | 122 |

| Optical Properties | | | | | |
|---|---|---|---|---|---|
| Δ RI | | 0.002 | 0.002 | 0.002 | --- |
| Haze | % | 1.7 | 1.8 | 2.9 | 1 |
| Transmittance | % | 91.3 | 91.3 | 90.8 | 93 |
| Clarity | % | 99.5 | 99.5 | 99.1 | 100 |

As can be seen from the experimental data in Table 1, molding composition comprising only block copolymers (b_{S2}) (i.e. SEBS-1; cf. Comparative Examples 1, 2 and 3) exhibit good optical properties, but provide only low to medium improvements in mechanical properties, in particular impact strength, compared to the respective SMMA component without impact-modifying block copolymers (cf. Ref. 1).

**Table 2. Examples 4 to 9.**

| Test | Units | Ex. 4 | Ex. 5 | Ex. 6 | Ex. 7 | Ex. 8 | Ex. 9 |
|---|---|---|---|---|---|---|---|
| SMMA | % | 80 | 75 | 70 | 80 | 75 | 70 |
| SEBS-1 | % | 0 | 0 | 0 | 0 | 0 | 0 |
| SEBS-2 | % | 20 | 25 | 30 | 0 | 0 | 0 |
| SEBS-3 | % | 0 | 0 | 0 | 20 | 25 | 30 |

| Mechanical Properties | | | | | | | |
|---|---|---|---|---|---|---|---|
| MFR (200 °C, 5.0 kg) | g/10 min | 4 | 4.5 | 5.3 | 4.5 | 4.5 | 4.8 |
| Notched Izod impact strength | J/m (ft-lb/in) | 19 (0.36) | 21 (0.39) | 22 (0.41) | 42 (0.78) | 40 (0.75) | 53 (1) |
| Un-notched Izod impact strength | J/m (ft-lb/in) | 534 (10) | 667 (12.5) | 694 (13) | 769 (14.4) | 641 (12) | 811 15.2 |
| Modulus | MPa (kpsi) | 1910 (277) | 1710 (248) | 1572 (228) | 1696 (246) | 1710 (248) | 1517 (220) |
| Tensile stress at yield | MPa (psi) | 39.3 (5698) | 35.5 (5144) | 32.5 (4712) | 35.2 (5103) | 35.6 (5169) | 30.8 (4461) |
| Tensile strain at break | % | 18.4 | 26.3 | 30.8 | 20.6 | 19.9 | 21.7 |
| Tensile energy to break | Nm (in-lbf) | 26.3 (233) | 35.0 (310) | 38.5 (341) | 26.8 (237) | 26.2 (232) | 25.6 (227) |
| Rockwell hardness | R Scale | 102 | 96 | 91 | 90 | 88 | 80 |

| Optical Properties | | | | | | | |
|---|---|---|---|---|---|---|---|
| ΔRI | | 0.009 | 0.009 | 0.009 | 0.013 | 0.013 | 0.013 |
| Haze | % | 24.4 | 31.8 | 38 | 43.8 | 74.8 | 82.3 |
| Transmittance | % | 82.7 | 82.1 | 81.4 | 75.4 | 66.5 | 64.5 |
| Clarity | % | 98.5 | 98.2 | 98.1 | 94.5 | 89 | 85 |

Examples 4 to 6 comprise different amounts of a block copolymer (b_{S1}-1) according to the invention (i.e. SEBS-2). Examples 7 to 9 comprise different amounts of a block copolymer (b_{S1}-2) according to the invention (i.e. SEBS-3).

It can be seen from the experimental data presented in Table 2, that the compositions according to the invention (cf. Examples 4 to 9) exhibit significantly improved mechanical properties. In particular the un-notched Izod impact strength is improved by a factor of 3 to 5 compared to the respective SMMA component without impact-modifying block copolymers (cf. Ref. 1).

**Table 3. Examples 10 to 15.**

| | Units | Ex. 10 | Ex. 11 | Ex. 12 | Ex. 13 | Ex. 14 | Ex. 15 |
|---|---|---|---|---|---|---|---|
| SMMA | % | 75 | 75 | 75 | 75 | 75 | 75 |
| SEBS-1 | % | 12.5 | 15 | 10 | 12.5 | 15 | 10 |
| SEBS-2 | % | 12.5 | 10 | 15 | 0 | 0 | 0 |
| SEBS-3 | % | 0 | 0 | 0 | 12.5 | 10 | 15 |

| Mechanical Properties | | | | | | | |
|---|---|---|---|---|---|---|---|
| MFR (200 °C, 5.0 kg) | g/10 min | 4.9 | 5 | 4.9 | 4.3 | 4.2 | 4.2 |
| Notched Izod impact strength | J/m (ft-lb/in) | 23 (0.44) | 10 (0.18) | 11 (0.2) | 23 (0.44) | 20 (0.38) | 26 (0.48) |
| Un-notched Izod impact strength | J/m (ft-lb/in) | 790 (14.8) | 272 (5.1) | 294 (5.5) | 518 (9.7) | 400 (7.5) | 774 (14.5) |
| Modulus | MPa (kpsi) | 1779 (258) | 2062 (299) | 1999 (290) | 1986 (288) | 2027 (294) | 1951 (283) |
| Tensile stress at yield | MPa (psi) | 35.9 (5213) | 43.2 (6272) | 40.9 (5936) | 41.7 (6043) | 42.7 (6200) | 41.0 (5951) |
| Tensile strain at break | % | 23.3 | 17.1 | 22.7 | 19.4 | 17.4 | 18.3 |
| Tensile energy to break | Nm (in-lbf) | 30.7 (272) | 24.9 (220) | 32.2 (285) | 27.6 (244) | 25.2 (223) | 25.6 (227) |
| Rockwell hardness | R Scale | 96 | 101 | 100 | 97 | 97 | 95 |

| Optical Properties | | | | | | | |
|---|---|---|---|---|---|---|---|
| ΔRI | | 0.005 | 0.005 | 0.006 | 0.006 | 0.004 | 0.007 |
| Haze | % | 5.4 | 8.6 | 12.7 | 13.9 | 23.7 | 37.2 |
| Transmittance | % | 89.9 | 87.7 | 86.1 | 85.4 | 80.9 | 76.9 |
| Clarity | % | 98.9 | 99.1 | 99.1 | 98.1 | 98.5 | 97.7 |

Examples 10 to 12 in Table 3 comprise different amounts of a block copolymer (b_{S1}-1) according to the invention (i.e. SEBS-2) in combination with a block copolymer (b_{S2}) according to the invention (i.e. SEBS-1). The total amount of SEBS-2 and SEBS-1 is 25 wt.-% of the total polymer compositions (P) of Examples 10 to 12.

Examples 13 to 15 in Table 3 comprise different amounts of a block copolymer (b_{S1}-2) according to the invention (i.e. SEBS-3) in combination with a block copolymer (b_{S2}) according to the invention (i.e. SEBS-1). The total amount of SEBS-3 and SEBS-1 is 25 wt.-% of the total polymer compositions (P) of Examples 13 to 15.

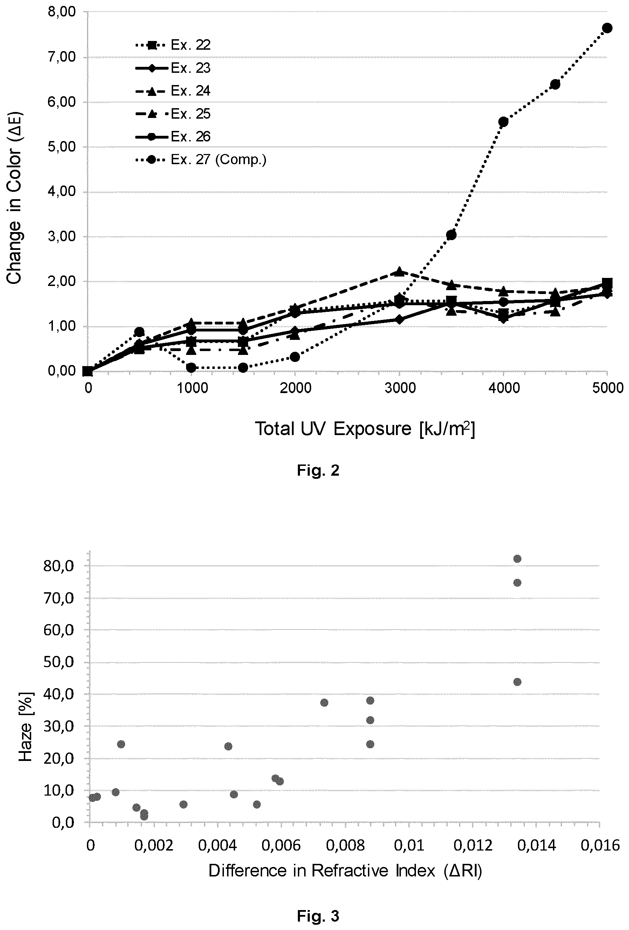

As can be seen from the experimental data presented in Table 3, good mechanical properties are achieved. Also acceptable to good optical properties are achieved. By comparing the experimental data of Examples 10 to 15 from Table 3 with the experimental data of Examples 5 and 8 from Table 2, which comprise 25 wt.-% of SEBS-2 or SEBS-3, respectively, it can be seen that optical properties may be improved by reducing the difference in refractive index ΔRI for the molding composition (P), e.g. by partially substitution of SEBS-2 or SEBS-3, respectively, by SEBS-1. Figure 3 confirms the trend that superior optical properties are achieved for molding compositions (P) having a low ΔRI.

**Table 4. Examples 16 to 21.**

| | Units | Ex. 16 | Ex. 17 | Ex. 18 | Ex. 19 | Ex. 20 | Ex. 21 |
|---|---|---|---|---|---|---|---|
| SMMA | % | 75 | 70 | 70 | 75 | 70 | 70 |
| SEBS-1 | % | 0 | 0 | 0 | 5 | 7.5 | 10 |
| SEBS-2 | % | 14 | 17 | 18 | 15 | 15 | 11 |
| SEBS-3 | % | 11 | 13 | 12 | 5 | 7.5 | 9 |

| Mechanical Properties | | | | | | | |
|---|---|---|---|---|---|---|---|
| MFR (200 °C, 5.0 kg) | g/10 min | 4.7 | 4.5 | 4.5 | 3.8 | 4.4 | 5.1 |
| Notched Izod impact strength | J/m (ft-lb/in) | 51 (0.95) | 44 (0.83) | 44 (0.83) | 34 (0.63) | 37 (0.7) | 32 (0.6) |
| Un-notched Izod impact strength | J/m (ft-lb/in) | 763 (14.3) | 822 (15.4) | 865 (16.2) | 865 (16.2) | 742 (13.9) | 865 (16.2) |
| Modulus | Mpa (kpsi) | 1586 (230) | 1551 (225) | 1696 (246) | 1841 (267) | 1786 (259) | 1793 (260) |
| Tensile stress at yield | MPa (psi) | 32.7 (4744) | 32.0 (4635) | 35.5 (5147) | 39.6 (5748) | 38.2 (5534) | 37.8 (5479) |
| Tensile strain at break | % | 22.3 | 23.5 | 18.5 | 16.5 | 22.2 | 18.2 |
| Tensile energy to break | Nm (in-lbf) | 27.6 (244) | 28.7 (254) | 23.0 (204) | 22.1 (196) | 28.5 (252) | 23.2 (205) |
| Rockwell hardness | R Scale | 86 | 84 | 89 | 96 | 94 | 93 |

| Optical Properties | | | | | | | |
|---|---|---|---|---|---|---|---|
| ΔRI | | 0.000 | 0.001 | 0.000 | 0.003 | 0.002 | 0.000 |
| Haze | % | 24.3 | 9.4 | 7.6 | 5.6 | 4.4 | 7.9 |
| Transmittance | % | 81 | 84.8 | 84.3 | 87.3 | 86.9 | 85.2 |
| Clarity | % | 96.6 | 98.6 | 99.2 | 99 | 99.4 | 99.2 |

Examples 16 to 18 in Table 4 comprise different amounts of a block copolymer (b_{S1}-1) according to the invention (i.e. SEBS-2) in combination with a block copolymer (b_{S1}-2) according to the invention (i.e. SEBS-3). The total amount of SEBS-2 and SEBS-3 is 25 wt.-% and 30 wt.-%, respectively, of the total polymer compositions (P) of Examples 16 to 18.

Examples 19 to 21 in Table 4 comprise different amounts of a block copolymer (b_{S1}-1) according to the invention (i.e. SEBS-2) in combination with a block copolymer (b_{S1}-2) according to the invention (i.e. SEBS-3) and a block copolymer (b_{S2}) according to the invention (i.e. SEBS-1). The total amount of SEBS-2, SEBS-3 and SEBS-1 is 25 wt.-% and 30 wt.-%, respectively, of the total polymer compositions (P) of Examples 19 to 21.

As can be seen from the data of Examples 16 to 21, the addition of the optional SEBS-1 provides only minor improvements to the properties of the molding compositions (P), but may be advantageous for a balanced property profile with regard to mechanical and optical properties. Reference is made to the following Examples 22 to 26.

**Table 5. Examples 22 to 26 and Comparative Example 27.**

| | Units | Ex. 22 | Ex. 23 | Ex. 24 | Ex. 25 | Ex. 26 | Ex. 27 (Comp.) |
|---|---|---|---|---|---|---|---|
| SMMA | % | 69.25 | 79.25 | 76.75 | 79.25 | 76.75 | 80.25 |
| SBS | % | 0 | 0 | 0 | 0 | 0 | 19 |
| SEBS-1 | % | 7.5 | 0 | 0 | 0 | 0 | 0 |
| SEBS-2 | % | 15 | 13.4 | 15 | 14.5 | 16.3 | 0 |
| SEBS-3 | % | 7.5 | 6.6 | 7.5 | 5.5 | 6.2 | 0 |
| UV Package | % | 0.75 | 0.75 | 0.75 | 0.75 | 0.75 | 0.75 |

| Mechanical Properties | | | | | | | |
|---|---|---|---|---|---|---|---|
| Notched Izod impact strength | J/m (ft-lb/in) | 35 (0.66) | 15 (0.29) | 37 (0.69) | 29 (0.54) | 38 (0.72) | 46 (0.87) |
| Un-notched Izod* impact strength | J/m (ft-lb/in) | 875 (16.4) | 774 (14.5) | 1201 (22.5) | 859 (16.1) | 1244 (23.3) | 1217 (22.8) |
| Tensile stress at yield | MPa (psi) | 35.3 (5118) | 44.2 (6414) | 40.9 (5937) | 44.5 (6461) | 39.6 (5750) | 36.6 (5315) |
| Tensile strain at break | % | 22.9 | 21.6 | 23.6 | 19.1 | 24.5 | 23.8 |
| Tensile energy to break | Nm (in-lbf) | 28.0 (248) | 31.9 (282) | 33.1 (293) | 28.2 (250) | 33.4 (296) | 31.3 (277) |
| Rockwell hardness | R Scale | 85 | 98 | 95 | 102 | 94 | 87 |

| Optical Properties | | | | | | | |
|---|---|---|---|---|---|---|---|
| ΔRI | | 0.002 | 0.002 | 0.001 | 0.003 | 0.003 | 0.002 |
| Haze | % | 3.6 | 7.1 | 6.2 | 4.7 | 6.2 | 3.7 |
| Transmittance | % | 86.3 | 83 | 82.9 | 85.6 | 83.4 | 89.3 |
| Clarity | % | 99.5 | 99.3 | 99.3 | 99.5 | 99.4 | 98.1 |

Examples 22 to 26 demonstrate the superior mechanical and optical properties of molding composition (P) comprising a block copolymer (b_{S1}-1) according to the invention (i.e. SEBS-2) in combination with a block copolymer (b_{S1}-2) according to the invention (i.e. SEBS-3) and optionally a block copolymer (b_{S2}) according to the invention (i.e. SEBS-1), wherein the block copolymer component (b) which comprises at least 50 wt.-%, based on the total weight of the block copolymer component (b), of SEBS-2. Additionally, the molding composition comprises 0.75 wt.-% of an UV stabilizer component (c).

Examples 22 to 26 and Comparative Example 27 were evaluated with respect to their stability towards light. UV stability testing was conducted according to SAE 2527 through SAE 1960 with xenon irradiance (340 nm) of 0.55 W/m² at 70°C for light cycle and 38°C for dark cycle. The optical properties of the samples were determined after exposure to 0 kJ/m², 500 kJ/m², 1000 kJ/m², 1500 kJ/m², 2000 kJ/m², 2500 kJ/m², 3000 kJ/m², 3500 kJ/m², 4000 kJ/m², 4500 kJ/m², and 5000 kJ/m². The results are summarized in Table 6.

**Table 6. Evaluation of UV stability of Examples 22 to 26 and Comparative Example 27.**

| | | Ex. 22 | Ex. 23 | Ex. 24 | Ex. 25 | Ex. 26 | Ex. 27 (Comp.) |
|---|---|---|---|---|---|---|---|
| | 0 kJ/m² | | | | | | |
| YI | unitless | 9.9 | 11.2 | 12.0 | 9.1 | 11.6 | 4.3 |
| L* | unitless | 93.3 | 91.9 | 91.8 | 93.0 | 92.0 | 94.9 |
| a* | unitless | -0.4 | -0.1 | -0.1 | -0.3 | -0.2 | -0.5 |
| b* | unitless | 5.3 | 5.9 | 6.3 | 4.9 | 6.1 | 2.4 |
| Haze | % | 3.6 | 7.1 | 6.2 | 4.7 | 6.2 | 3.7 |
| Transmittance | % | 86.3 | 83.0 | 82.9 | 85.6 | 83.4 | 89.3 |
| ΔYI | unitless | 0 | 0 | 0 | 0 | 0 | 0 |
| ΔE | unitless | 0 | 0 | 0 | 0 | 0 | 0 |

| UV irradiation: 500 kJ/m² | | | | | | | |
|---|---|---|---|---|---|---|---|
| YI | unitless | 9.5 | 10.6 | 12.1 | 9.1 | 11.5 | 2.9 |
| L* | unitless | 93.1 | 91.7 | 91.3 | 92.6 | 91.6 | 95.1 |
| a* | unitless | -0.1 | 0.1 | 0.2 | 0.0 | 0.1 | -0.3 |
| b* | unitless | 5.0 | 5.4 | 6.2 | 4.7 | 5.9 | 1.6 |
| Haze | % | 4.3 | 7.7 | 7.0 | 5.2 | 6.4 | 4.0 |
| Transmittance | % | 85.5 | 82.3 | 82.1 | 84.6 | 82.5 | 89.6 |
| ΔYI | unitless | -0.4 | -0.6 | 0.2 | -0.1 | -0.2 | -1.4 |
| ΔE | unitless | 0.5 | 0.5 | 0.6 | 0.5 | 0.6 | 0.9 |

| UV irradiation: 1000 kJ/m² | | | | | | | |
|---|---|---|---|---|---|---|---|
| YI | unitless | 9.9 | 11.3 | 12.2 | 9.1 | 11.9 | 3.6 |
| L* | unitless | 92.9 | 91.4 | 91.2 | 92.6 | 91.4 | 95.0 |
| a* | unitless | -0.1 | 0.2 | 0.2 | 0.0 | 0.1 | -0.4 |
| b* | unitless | 5.2 | 5.8 | 6.2 | 4.7 | 6.1 | 2.0 |
| ΔYI | unitless | 0.0 | 0.1 | 0.3 | -0.1 | 0.3 | -0.7 |
| ΔE | unitless | 0.6 | 0.6 | 0.7 | 0.5 | 0.7 | 0.4 |

| UV irradiation: 1500 kJ/m² | | | | | | | |
|---|---|---|---|---|---|---|---|
| YI | unitless | 9.9 | 11.4 | 12.9 | 9.3 | 12.2 | 4.1 |
| L* | unitless | 92.8 | 91.3 | 90.9 | 92.6 | 91.2 | 94.9 |
| a* | unitless | -0.1 | 0.2 | 0.2 | 0.0 | 0.2 | -0.4 |
| b* | unitless | 5.2 | 5.8 | 6.6 | 4.8 | 6.3 | 2.4 |
| Haze | % | 4.7 | 8.9 | 8.1 | 6.1 | 7.5 | 5.2 |
| Transmittance | % | 85.0 | 81.8 | 81.0 | 83.9 | 81.7 | 89.2 |
| ΔYI | unitless | 0.0 | 0.1 | 0.9 | 0.2 | 0.6 | -0.2 |
| ΔE | unitless | 0.6 | 0.7 | 1.1 | 0.5 | 0.9 | 0.1 |

| UV irradiation: 2000 kJ/m² | | | | | | | |
|---|---|---|---|---|---|---|---|
| YI | unitless | 11.0 | 11.6 | 13.1 | 9.7 | 12.7 | 4.8 |
| L* | unitless | 92.1 | 91.0 | 90.5 | 92.3 | 90.8 | 94.8 |
| a* | unitless | 0.0 | 0.2 | 0.3 | 0.0 | 0.2 | -0.5 |
| b* | unitless | 5.7 | 5.9 | 6.6 | 5.0 | 6.5 | 2.7 |
| ΔYI | unitless | 1.1 | 0.4 | 1.2 | 0.5 | 1.1 | 0.5 |
| ΔE | unitless | 1.3 | 0.9 | 1.4 | 0.8 | 1.3 | 0.3 |

| UV irradiation: 2500 kJ/m² | | | | | | | |
|---|---|---|---|---|---|---|---|
| YI | unitless | 10.9 | 12.0 | 13.5 | 10.0 | 12.5 | 6.7 |
| L* | unitless | 92.2 | 90.9 | 90.3 | 92.1 | 90.8 | 94.3 |
| a* | unitless | 0.0 | 0.2 | 0.3 | 0.0 | 0.2 | -0.7 |
| b* | unitless | 5.7 | 6.1 | 6.8 | 5.1 | 6.4 | 3.8 |
| ΔYI | unitless | 1.0 | 0.7 | 1.5 | 0.8 | 0.9 | 2.4 |
| ΔE | unitless | 1.3 | 1.1 | 1.6 | 1.0 | 1.3 | 1.5 |

| UV irradiation: 3000 kJ/m² | | | | | | | |
|---|---|---|---|---|---|---|---|
| YI | unitless | 11.3 | 12.1 | 14.3 | 10.8 | 13.1 | 6.9 |
| L* | unitless | 91.9 | 90.8 | 89.9 | 91.5 | 90.7 | 94.4 |
| a* | unitless | 0.0 | 0.2 | 0.3 | 0.1 | 0.2 | -0.7 |
| b* | unitless | 5.9 | 6.1 | 7.2 | 5.5 | 6.7 | 3.9 |
| ΔYI | unitless | 1.4 | 0.9 | 2.4 | 1.7 | 1.5 | 2.6 |
| ΔE | unitless | 1.6 | 1.2 | 2.2 | 1.6 | 1.5 | 1.6 |

| UV irradiation: 3500 kJ/m² | | | | | | | |
|---|---|---|---|---|---|---|---|
| YI | unitless | 11.6 | 12.8 | 14.0 | 10.5 | 13.1 | 8.7 |
| L* | unitless | 92.0 | 90.5 | 90.1 | 91.8 | 90.7 | 93.1 |
| a* | unitless | 0.0 | 0.3 | 0.3 | 0.1 | 0.2 | -0.7 |
| b* | unitless | 6.0 | 6.5 | 7.1 | 5.4 | 6.7 | 4.9 |
| Haze | % | 6.4 | 10.4 | 9.3 | 6.6 | 7.7 | 46.8 |
| Transmittance | % | 83.1 | 80.1 | 80.1 | 83.3 | 80.6 | 85.0 |
| ΔYI | unitless | 1.7 | 1.6 | 2.1 | 1.4 | 1.5 | 4.4 |
| ΔE | unitless | 1.6 | 1.5 | 1.9 | 1.3 | 1.5 | 3.0 |

| UV irradiation: 4000 kJ/m² | | | | | | | |
|---|---|---|---|---|---|---|---|
| YI | unitless | 11.2 | 12.5 | 13.9 | 10.4 | 13.4 | 9.3 |
| L* | unitless | 92.2 | 90.8 | 90.3 | 91.9 | 90.7 | 90.0 |
| a* | unitless | 0.0 | 0.2 | 0.3 | 0.1 | 0.2 | -0.7 |
| b* | unitless | 5.9 | 6.4 | 7.0 | 5.4 | 6.8 | 5.0 |
| ΔYI | unitless | 1.3 | 1.3 | 1.9 | 1.3 | 1.7 | 5.0 |
| ΔE | unitless | 1.3 | 1.2 | 1.8 | 1.2 | 1.6 | 5.6 |

| UV irradiation: 4500 kJ/m² | | | | | | | |
|---|---|---|---|---|---|---|---|
| YI | unitless | 11.7 | 13.1 | 13.9 | 10.7 | 13.6 | 10.2 |
| L* | unitless | 92.0 | 90.5 | 90.3 | 91.9 | 90.7 | 96.4 |
| a* | unitless | 0.0 | 0.2 | 0.2 | 0.0 | 0.2 | 0.0 |
| b* | unitless | 6.1 | 6.7 | 7.0 | 5.5 | 7.0 | 0.6 |
| ΔYI | unitless | 1.8 | 1.9 | 1.9 | 1.6 | 2.0 | 5.9 |
| ΔE | unitless | 1.5 | 1.6 | 1.7 | 1.3 | 1.6 | 6.4 |

| UV irradiation: 5000 kJ/m² | | | | | | | |
|---|---|---|---|---|---|---|---|
| YI | unitless | 11.8 | 13.1 | 14.2 | 11.2 | 13.7 | 10.0 |
| L* | unitless | 91.6 | 90.4 | 90.2 | 91.5 | 90.3 | 87.9 |
| a* | unitless | -0.1 | 0.2 | 0.2 | 0.1 | 0.2 | -0.9 |
| b* | unitless | 6.2 | 6.7 | 7.2 | 5.8 | 7.0 | 5.3 |
| ΔYI | unitless | 1.9 | 1.9 | 2.2 | 2.1 | 2.1 | 5.7 |
| ΔE | unitless | 2.0 | 1.7 | 1.9 | 1.8 | 2.0 | 7.6 |
| Haze | % | 23.8 | 14.9 | 10.9 | 8.9 | 23.8 | 80.1 |
| ΔHaze | | 20.2 | 7.8 | 4.7 | 4.2 | 17.6 | 76.4 |
| Transmittance | % | 82.9 | 79.6 | 79.3 | 82.6 | 78.7 | 76.9 |
| ΔTransmittance | | -3.4 | -3.4 | -3.6 | -3.0 | -4.7 | -12.4 |

As can be seen from the results in Table 6, Examples 22 to 26, which are in accordance with the invention, are superior in all determined optical properties compared to Comparative Example 27. In particular, Examples 23 to 25 have exceptional optical properties with a difference in haze before exposure and after exposure to 5000 kJ/m² (ΔHaze) of less than 10.

## Claims

1. Molding composition (P) comprising (or consisting of) a blend of components (a), (b), (c) and (d):
(a) 30 to 95 wt.-% of a random copolymer component (a) comprising (or consisting of) at least one random copolymer (a-1) made from 30 to 70 wt.-% of at least one vinylaromatic monomer (a11), preferably styrene, and 30 to 70 wt.-%, methyl methacrylate (a12);
(b) 5 to 70 wt.-% of a block copolymer component (b) comprising (or consisting of) at least one block copolymer (b_{S1}), wherein the copolymer (b_{S1}) comprises:
at least one hard block H, comprising repeating units of vinyl aromatic monomers, preferably styrene, and
at least one random soft block S₁ comprising repeating units of at least one mono-functional olefinic monomer and at least one vinylaromatic monomer, preferably repeating units of ethylene, at least one mono-functional olefinic monomer having 3 to 10 carbon atoms, and styrene,
wherein the repeating units of the mono-functional olefinic monomers and the vinyl aromatic monomers are statistically distributed within the random soft block S₁,
and wherein the proportion of repeating units of the vinyl aromatic monomers - based on the entire block copolymer (b_{S1}) - is from 25 to 85 wt.-%;
(c) 0 to 2 wt.-% of at least one UV stabilizer component (c); and
(d) 0 to 2 wt.-% of one or more additive(s) and/or processing aid(s) as component (d), which are different from the components (a), (b) and (c);
wherein the total amount of components (a), (b), (c) and (d) is 100 wt.-%, and
wherein the molding composition (P) has an un-notched Izod impact strength determined according to ASTM D4812 of greater than 250 J/m.

2. Molding composition (P) according to claim 1, wherein the block copolymer component (b) comprises (or consists of) at least a first block copolymer (b-1) and a second block copolymer (b-2), wherein the first block copolymer (b-1) and the second block copolymer (b-2) differ in the total amount of repeating units of vinylaromatic monomers in the entire first block copolymer (b-1) and the entire second block copolymer (b-2), respectively.

3. Molding composition (P) according to claim 2, wherein the block copolymer component (b) comprises (or consists of) at least one block copolymer (b-1) having a proportion of the repeating units of vinyl aromatic monomers - based on the entire block copolymer (b-1) - of from 60 to 85 wt.-%, preferably from 62 to 85 wt.-%, often from 65 to 85 wt.-%; and at least one block copolymer (b-2) having a proportion of the vinyl aromatic monomers - based on the entire block copolymer (b-2) - of from 25 to 59 wt.-%, preferably from 30 to 59 wt.-%, often from 35 to 59 wt.-%.

4. Molding composition (P) according to any of claims 1 to 3 comprising:
40 to 90 wt.-%, preferably 50 to 85 wt.-%, of the random copolymer component (a);
10 to 60 wt.-%, preferably 15 to 50 wt.-%, of the block copolymer component (b); and
0 to 2 wt.-% of the UV stabilizer component (c),
0 to 2 wt.-% of component (d),
wherein the total amount of components (a), (b), (c) and (d) is 100 wt.-%.

5. Molding composition (P) according to any of claims 1 to 4, wherein the block copolymer component (b) comprises, in addition to the at least one block copolymer (b_{S1}), at least one further block copolymer (b_{S2}), wherein the at least one block copolymer (b_{S2}) comprises:
at least one hard block H, comprising repeating units of vinyl aromatic monomers, preferably styrene, and
at least one soft block S₂ comprising repeating units of mono-functional olefinic monomers, preferably repeating units of ethylene and at least one mono-functional olefinic monomer having 3 to 10 carbon atoms, wherein the soft block S₂ comprises less than or equal to 5 wt.-% of repeating units of vinyl aromatic monomers, based on the total weight of the soft blocks S₂,
and wherein the proportion of repeating units of the vinyl aromatic monomers - based on the entire block copolymer (b_{S2}) - is from 25 to 85 wt.-%;
and wherein the total amount of components (a), (b), (c) and (d) is 100 wt.-%.

6. Molding composition (P) according to claim 5, wherein component (b) comprises (or consists of):
| | |
|---|---|
| (b_{S1}) | 50 to 100 wt.-%, based on the total weight of component (b), of the at least one block copolymer (b_{S1}); and |
| (b_{S2}) | 0 to 50 wt.-%, based on the total weight of component (b), of the at least one block copolymer (b_{S2}), |
and wherein the total amount of components (b_{S1}) and (b_{S2}) is 100 wt.-%.

7. Molding composition (P) according to any of claims 1 to 6 comprising as component (b) at least two different block copolymers (b_{S1}-1) and (b_{S1}-2) as defined in the following:
(b_{S1}-1) at least one block copolymer (b_{S1}-1) which comprises:
at least one hard block H, comprising repeating units of vinyl aromatic monomers, preferably styrene, and
at least one random soft block S₁ comprising repeating units of at least one mono-functional olefinic monomer and at least one vinylaromatic monomer, preferably repeating units of ethylene, at least one mono-functional olefinic monomer having 3 to 10 carbon atoms, and styrene,
wherein the repeating units of mono-functional olefinic monomers and the vinyl aromatic monomers are statistically distributed within the random soft block S₁, and
wherein the proportion of the repeating units of vinyl aromatic monomers - based on the entire block copolymer (b_{S1}-1) - is from 60 to 85 wt.-%, preferably from 62 to 85 wt.-%, often from 65 to 85 wt.-%; and
(b_{S1}-2) at least one block copolymer (b_{S1}-2) which comprises:
at least one hard block H, comprising repeating units of vinyl aromatic monomers, preferably styrene, and
at least one random soft block S₁ comprising repeating units of at least one mono-functional olefinic monomer and at least one vinylaromatic monomer, preferably repeating units of ethylene, at least one mono-functional olefinic monomer having 3 to 10 carbon atoms and styrene,
wherein the repeating units of mono-functional olefinic monomers and the vinyl aromatic monomers are statistically distributed within the random soft block S₁, and
wherein the proportion of the vinyl aromatic monomers - based on the entire block copolymer (b_{S1}-2) - is from 25 to 59 wt.-%, preferably from 30 to 59 wt.- %, often from 35 to 59 wt.-%.

8. Molding composition (P) according to any of claims 1 to 7 comprising as component (b) at least two different block copolymers (b_{S1}-2) and (b_{S2}-1) as defined in the following:
(b_{S1}-2) at least one block copolymer (b_{S1}-2) which comprises:
at least one hard block H, comprising repeating units of vinyl aromatic monomers, preferably styrene, and
at least one random soft block S₁ comprising repeating units of at least one mono-functional olefinic monomer and at least one vinylaromatic monomer, preferably repeating units of ethylene, at least one mono-functional olefinic monomer having 3 to 10 carbon atoms and styrene,
wherein the repeating units of mono-functional olefinic monomers and the vinyl aromatic monomers are statistically distributed within the random soft block S₁, and
wherein the proportion of the vinyl aromatic monomers - based on the entire block copolymer (b_{S1}-2) - is from 25 to 59 wt.-%, preferably from 30 to 59 wt.- %, often from 35 to 59 wt.-%; and
(b_{S2}-1) at least one block copolymer (b_{S2}-1) which comprises:
at least one hard block H, comprising repeating units of vinyl aromatic monomers, preferably styrene, and
at least one soft block S₂ comprising repeating units of mono-functional olefinic monomers, preferably repeating units of ethylene and at least one mono-functional olefinic monomer having 3 to 10 carbon atoms,
wherein the proportion of the repeating units of vinyl aromatic monomers - based on the entire block copolymer (b_{S2}-1) - is from 60 to 85 wt.-%, preferably from 62 to 85 wt.-%, often from 65 to 85 wt.-%.

9. Molding composition (P) according to any of claims 1 to 8, wherein the values of the refractive indexes of the random copolymer component (a) and the block copolymer component (b) are within the range of from 1.52 to 1.57 at 589.3 nm, determined analogously to ASTM C 1648-12.

10. Molding composition (P) according to any of claims 1 to 9, wherein the block copolymer (b_{S1}), the block copolymer (b_{S1}-1) and the block copolymer (b_{S1}-2), respectively, is a linear block copolymer with two terminal hard blocks H and one central soft block S₁.

11. Molding composition (P) according to any of claims 1 to 10, wherein the molding composition (P) has an initial haze determined according to ASTM D1003 for injection molded plaques having a thickness of 3.2 mm (0.125 in) of less than 8%.

12. Molding composition (P) according to any of claims 1 to 11, wherein the molding composition (P) has an un-notched Izod impact strength determined according to ASTM D4812 of greater than 500 J/m.

13. Process for the preparation of a molding composition (P) according to any of claims 1 to 12 wherein components (a) and (b) and, if present, components (c) and/or (d) are melt-mixed, preferably by extrusion.

14. Shaped article produced from the molding composition (P) according to any of claims 1 to 12.

15. Use of the molding composition (P) according to any of claims 1 to 12 or of a shaped article according to claim 14 for housewares and home appliances.

## Patentansprüche

1. Formmasse (P) umfassend (oder bestehend aus) eine Mischung der Komponenten (a), (b), (c) und (d):
(a) 30 bis 95 Gew.-% einer statistischen Copolymer-Komponente (a), umfassend (oder bestehend aus) mindestens einem statistischen Copolymer (a-1), hergestellt aus 30 bis 70 Gew.-% mindestens eines vinylaromatischen Monomers (a11), vorzugsweise Styrol, und 30 bis 70 Gew.-% Methylmethacrylat (a12);
(b) 5 bis 70 Gew.-% einer Blockcopolymer-Komponente (b), umfassend (oder bestehend aus) mindestens ein Blockcopolymer (b_{S1}), wobei das Copolymer (b_{S1}) umfasst:
mindestens einen Hartblock H, umfassend Wiederholungseinheiten vinylaromatischer Monomere, vorzugsweise Styrol, und
mindestens einen statistischen Weichblock S₁, umfassend Wiederholungseinheiten mindestens eines monofunktionellen olefinischen Monomers und mindestens eines vinylaromatischen Monomers, vorzugsweise Wiederholungseinheiten von Ethylen, mindestens eines monofunktionellen olefinischen Monomers mit 3 bis 10 Kohlenstoffatomen und Styrol,
wobei die Wiederholungseinheiten der monofunktionellen olefinischen Monomere und der vinylaromatischen Monomere statistisch innerhalb des statistischen Weichblocks S₁ verteilt sind,
und wobei der Anteil der Wiederholungseinheiten der vinylaromatischen Monomere - bezogen auf das gesamte Blockcopolymer (b_{S1}) - 25 bis 85 Gew.-% beträgt;
(c) 0 bis 2 Gew.-% mindestens einer UV-Stabilisator-Komponente (c); und
(d) 0 bis 2 Gew.-% eines Additivs oder mehrerer Additive und/oder Verarbeitungshilfsmittel als Komponente (d), die sich von den Komponenten (a), (b) und (c) unterscheiden;
wobei die Gesamtmenge der Komponenten (a), (b), (c) und (d) 100 Gew.-% beträgt, und wobei die Formmasse (P) eine ungekerbte Izod-Schlagzähigkeit, bestimmt gemäß ASTM D4812, von mehr als 250 J/m aufweist.

2. Formmasse (P) nach Anspruch 1, wobei die Blockcopolymer-Komponente (b) mindestens ein erstes Blockcopolymer (b-1) und ein zweites Blockcopolymer (b-2) umfasst (oder daraus besteht), wobei sich das erste Blockcopolymer (b-1) und das zweite Blockcopolymer (b-2) in der Gesamtmenge der Wiederholungseinheiten vinylaromatischer Monomere im gesamten ersten Blockcopolymer (b-1) bzw. im gesamten zweiten Blockcopolymer (b-2) unterscheiden.

3. Formmasse (P) nach Anspruch 2, wobei die Blockcopolymer-Komponente (b) mindestens ein Blockcopolymer (b-1) mit einem Anteil der Wiederholungseinheiten vinylaromatischer Monomere - bezogen auf das gesamte Blockcopolymer (b-1) - von 60 bis 85 Gew.-%, vorzugsweise 62 bis 85 Gew.-%, häufig 65 bis 85 Gew.-%; und mindestens ein Blockcopolymer (b-2) mit einem Anteil der vinylaromatischen Monomere - bezogen auf das gesamte Blockcopolymer (b-2) - von 25 bis 59 Gew.-%, vorzugsweise 30 bis 59 Gew.- %, häufig 35 bis 59 Gew.-%, umfasst (oder daraus besteht).

4. Formmasse (P) nach einem der Ansprüche 1 bis 3, umfassend:
40 bis 90 Gew.-%, vorzugsweise 50 bis 85 Gew.-%, der statistischen Copolymer-Komponente (a);
10 bis 60 Gew.-%, vorzugsweise 15 bis 50 Gew.-%, der Blockcopolymer-Komponente (b); und
0 bis 2 Gew.-% der UV-Stabilisator-Komponente (c),
0 bis 2 Gew.-% der Komponente (d),
wobei die Gesamtmenge der Komponenten (a), (b), (c) und (d) 100 Gew.-% beträgt.

5. Formmasse (P) nach einem der Ansprüche 1 bis 4, wobei die Blockcopolymer-Komponente (b) zusätzlich zu dem mindestens einen Blockcopolymer (b_{S1}) mindestens ein weiteres Blockcopolymer (b_{S2}) umfasst, wobei das mindestens eine Blockcopolymer (b_{S2}) umfasst:
mindestens einen Hartblock H, umfassend Wiederholungseinheiten vinylaromatischer Monomere, vorzugsweise Styrol, und
mindestens einen Weichblock S₂, umfassend Wiederholungseinheiten monofunktioneller olefinischer Monomere, vorzugsweise Wiederholungseinheiten von Ethylen und mindestens eines monofunktionellen olefinischen Monomers mit 3 bis 10 Kohlenstoffatomen, wobei der Weichblock S₂ weniger als oder gleich 5 Gew.-% Wiederholungseinheiten vinylaromatischer Monomere umfasst, bezogen auf das Gesamtgewicht der Weichblöcke S₂,
und wobei der Anteil der Wiederholungseinheiten der vinylaromatischen Monomere - bezogen auf das gesamte Blockcopolymer (b_{S2}) - 25 bis 85 Gew.-% beträgt;
und wobei die Gesamtmenge der Komponenten (a), (b), (c) und (d) 100 Gew.-% beträgt.

6. Formmasse (P) nach Anspruch 5, wobei Komponente (b) umfasst (oder besteht aus):
| | |
|---|---|
| (b_{S1}) | 50 bis 100 Gew.-%, bezogen auf das Gesamtgewicht der Komponente (b), des mindestens einen Blockcopolymers (b_{S1}); und |
| (b_{S2}) | 0 bis 50 Gew.-%, bezogen auf das Gesamtgewicht der Komponente (b), des mindestens einen Blockcopolymers (b_{S2}), |
und wobei die Gesamtmenge der Komponenten (b_{S1}) und (b_{S2}) 100 Gew.-% beträgt.

7. Formmasse (P) nach einem der Ansprüche 1 bis 6, umfassend als Komponente (b) mindestens zwei verschiedene Blockcopolymere (b_{S1}-1) und (b_{S1}-2), wie nachfolgend definiert:
(b_{S1}-1) mindestens ein Blockcopolymer (b_{S1}-1), das umfasst:
mindestens einen Hartblock H, umfassend Wiederholungseinheiten vinylaromatischer Monomere, vorzugsweise Styrol, und
mindestens einen statistischen Weichblock S₁, umfassend Wiederholungseinheiten mindestens eines monofunktionellen olefinischen Monomers und mindestens eines vinylaromatischen Monomers, vorzugsweise Wiederholungseinheiten von Ethylen, mindestens eines monofunktionellen olefinischen Monomers mit 3 bis 10 Kohlenstoffatomen und Styrol,
wobei die Wiederholungseinheiten monofunktioneller olefinischer Monomere und der vinylaromatischen Monomere statistisch innerhalb des statistischen Weichblocks S₁ verteilt sind, und
wobei der Anteil der Wiederholungseinheiten vinylaromatischer Monomere bezogen auf das gesamte Blockcopolymer (b_{S1}-1) 60 bis 85 Gew.-%, vorzugsweise 62 bis 85 Gew.-%, häufig 65 bis 85 Gew.-%, beträgt; und
(b_{S1}-2) mindestens ein Blockcopolymer (b_{S1}-2), das umfasst:
mindestens einen Hartblock H, umfassend Wiederholungseinheiten vinylaromatischer Monomere, vorzugsweise Styrol, und
mindestens einen statistischen Weichblock S₁, umfassend Wiederholungseinheiten mindestens eines monofunktionellen olefinischen Monomers und mindestens eines vinylaromatischen Monomers, vorzugsweise Wiederholungseinheiten von Ethylen, mindestens eines monofunktionellen olefinischen Monomers mit 3 bis 10 Kohlenstoffatomen und Styrol,
wobei die Wiederholungseinheiten monofunktioneller olefinischer Monomere und der vinylaromatischen Monomere statistisch innerhalb des statistischen Weichblocks S₁ verteilt sind, und
wobei der Anteil der vinylaromatischen Monomere bezogen auf das gesamte Blockcopolymer (b_{S1}-2) 25 bis 59 Gew.-%, vorzugsweise 30 bis 59 Gew.-%, häufig 35 bis 59 Gew.-%, beträgt.

8. Formmasse (P) nach einem der Ansprüche 1 bis 7, umfassend als Komponente (b) mindestens zwei verschiedene Blockcopolymere (b_{S1}-2) und (b_{S2}-1), wie nachfolgend definiert:
(b_{S1}-2) mindestens ein Blockcopolymer (b_{S1}-2), das umfasst:
mindestens einen Hartblock H, umfassend Wiederholungseinheiten vinylaromatischer Monomere, vorzugsweise Styrol, und
mindestens einen statistischen Weichblock S₁, umfassend Wiederholungseinheiten mindestens eines monofunktionellen olefinischen Monomers und mindestens eines vinylaromatischen Monomers, vorzugsweise Wiederholungseinheiten von Ethylen, mindestens eines monofunktionellen olefinischen Monomers mit 3 bis 10 Kohlenstoffatomen und Styrol,
wobei die Wiederholungseinheiten monofunktioneller olefinischer Monomere und der vinylaromatischen Monomere statistisch innerhalb des statistischen Weichblocks S₁ verteilt sind, und
wobei der Anteil der vinylaromatischen Monomere bezogen auf das gesamte Blockcopolymer (b_{S1}-2) 25 bis 59 Gew.-%, vorzugsweise 30 bis 59 Gew.-%, häufig 35 bis 59 Gew.-%, beträgt; und
(b_{S2}-1) mindestens ein Blockcopolymer (b_{S2}-1), das umfasst:
mindestens einen Hartblock H, umfassend Wiederholungseinheiten vinylaromatischer Monomere, vorzugsweise Styrol, und
mindestens einen Weichblock S₂, umfassend Wiederholungseinheiten monofunktioneller olefinischer Monomere, vorzugsweise Wiederholungseinheiten von Ethylen und mindestens eines monofunktionellen olefinischen Monomers mit 3 bis 10 Kohlenstoffatomen,
wobei der Anteil der Wiederholungseinheiten vinylaromatischer Monomere bezogen auf das gesamte Blockcopolymer (b_{S2}-1) 60 bis 85 Gew.-%, vorzugsweise 62 bis 85 Gew.-%, häufig 65 bis 85 Gew.-%, beträgt.

9. Formmasse (P) nach einem der Ansprüche 1 bis 8, wobei die Werte der Brechungsindizes der statistischen Copolymer-Komponente (a) und der Blockcopolymer-Komponente (b) im Bereich von 1,52 bis 1,57 bei 589,3 nm liegen, bestimmt in Anlehnung an ASTM C 1648-12.

10. Formmasse (P) nach einem der Ansprüche 1 bis 9, wobei das Blockcopolymer (b_{S1}), das Blockcopolymer (b_{S1}-1) bzw. das Blockcopolymer (b_{S1}-2) jeweils ein lineares Blockcopolymer mit zwei endständigen Hartblöcken H und einem zentralen Weichblock S₁ ist.

11. Formmasse (P) nach einem der Ansprüche 1 bis 10, wobei die Formmasse (P) eine anfängliche Trübung, bestimmt gemäß ASTM D1003 für spritzgegossene Platten mit einer Dicke von 3,2 mm (0,125 in), von weniger als 8 % aufweist.

12. Formmasse (P) nach einem der Ansprüche 1 bis 11, wobei die Formmasse (P) eine ungekerbte Izod-Schlagzähigkeit, bestimmt gemäß ASTM D4812, von mehr als 500 J/m aufweist.

13. Verfahren zur Herstellung einer Formmasse (P) nach einem der Ansprüche 1 bis 12, wobei die Komponenten (a) und (b) sowie, falls vorhanden, die Komponenten (c) und/oder (d) schmelzgemischt werden, vorzugsweise durch Extrusion.

14. Formkörper, hergestellt aus der Formmasse (P) nach einem der Ansprüche 1 bis 12.

15. Verwendung der Formmasse (P) nach einem der Ansprüche 1 bis 12 oder eines Formkörpers nach Anspruch 14 für Haushaltswaren und Haushaltsgeräte.

## Revendications

1. Composition de moulage (P) comprenant (ou consistant en) un mélange des composants (a), (b), (c) et (d) :
(a) 30 à 95 % en poids d'un composant copolymère statistique (a) comprenant (ou consistant en) au moins un copolymère statistique (a-1) fabriqué à partir de 30 à 70 % en poids d'au moins un monomère vinylaromatique (a11), de préférence le styrène, et de 30 à 70 % en poids de méthacrylate de méthyle (a12) ;
(b) 5 à 70 % en poids d'un composant copolymère à blocs (b) comprenant (ou consistant en) au moins un copolymère à blocs (b_{S1}), le copolymère (b_{S1}) comprenant :
au moins un bloc dur H comprenant des motifs répétitifs de monomères vinylaromatiques, de préférence le styrène, et
au moins un bloc mou statistique S₁ comprenant des motifs répétitifs d'au moins un monomère oléfinique monofonctionnel et d'au moins un monomère vinylaromatique, de préférence des motifs répétitifs d'éthylène, d'au moins un monomère oléfinique monofonctionnel ayant 3 à 10 atomes de carbone et de styrène,
les motifs répétitifs des monomères oléfiniques monofonctionnels et des monomères vinylaromatiques étant distribués statistiquement au sein du bloc mou statistique S₁, et la proportion des motifs répétitifs des monomères vinylaromatiques - rapportée à l'ensemble du copolymère à blocs (b_{S1}) - étant de 25 à 85 % en poids ;
(c) 0 à 2 % en poids d'au moins un composant stabilisant UV (c) ; et
(d) 0 à 2 % en poids d'un ou plusieurs additif(s) et/ou auxiliaire(s) de traitement en tant que composant (d), qui sont différents des composants (a), (b) et (c) ;
la quantité totale des composants (a), (b), (c) et (d) étant de 100 % en poids, et la composition de moulage (P) présentant une résistance au choc Izod sans entaille déterminée selon ASTM D4812 supérieure à 250 J/m.

2. Composition de moulage (P) selon la revendication 1, dans laquelle le composant copolymère à blocs (b) comprend (ou consiste en) au moins un premier copolymère à blocs (b-1) et un second copolymère à blocs (b-2), le premier copolymère à blocs (b-1) et le second copolymère à blocs (b-2) différant par la quantité totale de motifs répétitifs de monomères vinylaromatiques dans l'ensemble du premier copolymère à blocs (b-1) et dans l'ensemble du second copolymère à blocs (b-2), respectivement.

3. Composition de moulage (P) selon la revendication 2, dans laquelle le composant copolymère à blocs (b) comprend (ou consiste en) au moins un copolymère à blocs (b-1) ayant une proportion de motifs répétitifs de monomères vinylaromatiques - rapportée à l'ensemble du copolymère à blocs (b-1) - de 60 à 85 % en poids, de préférence de 62 à 85 % en poids, souvent de 65 à 85 % en poids ; et au moins un copolymère à blocs (b-2) ayant une proportion de monomères vinylaromatiques - rapportée à l'ensemble du copolymère à blocs (b-2) - de 25 à 59 % en poids, de préférence de 30 à 59 % en poids, souvent de 35 à 59 % en poids.

4. Composition de moulage (P) selon l'une quelconque des revendications 1 à 3, comprenant :
40 à 90 % en poids, de préférence 50 à 85 % en poids, du composant copolymère statistique (a) ;
10 à 60 % en poids, de préférence 15 à 50 % en poids, du composant copolymère à blocs (b) ; et
0 à 2 % en poids du composant stabilisant UV (c),
0 à 2 % en poids du composant (d),
la quantité totale des composants (a), (b), (c) et (d) étant de 100 % en poids.

5. Composition de moulage (P) selon l'une quelconque des revendications 1 à 4, dans laquelle le composant copolymère à blocs (b) comprend, en plus de l'au moins un copolymère à blocs (b_{S1}), au moins un copolymère à blocs supplémentaire (b_{S2}), l'au moins un copolymère à blocs (b_{S2}) comprenant :
au moins un bloc dur H comprenant des motifs répétitifs de monomères vinylaromatiques, de préférence le styrène, et
au moins un bloc mou S₂ comprenant des motifs répétitifs de monomères oléfiniques monofonctionnels, de préférence des motifs répétitifs d'éthylène et d'au moins un monomère oléfinique monofonctionnel ayant 3 à 10 atomes de carbone, le bloc mou S₂ comprenant moins de ou égal à 5 % en poids de motifs répétitifs de monomères vinylaromatiques, rapportés au poids total des blocs mous S₂,
et la proportion des motifs répétitifs des monomères vinylaromatiques - rapportée à l'ensemble du copolymère à blocs (b_{S2}) - étant de 25 à 85 % en poids ;
et la quantité totale des composants (a), (b), (c) et (d) étant de 100 % en poids.

6. Composition de moulage (P) selon la revendication 5, dans laquelle le composant (b) comprend (ou consiste en) :
| | |
|---|---|
| (b_{S1}) | 50 à 100 % en poids, rapportés au poids total du composant (b), de l'au moins un copolymère à blocs (b_{S1}) ; et |
| (b_{S2}) | 0 à 50 % en poids, rapportés au poids total du composant (b), de l'au moins un copolymère à blocs (b_{S2}), |
la quantité totale des composants (b_{S1}) et (b_{S2}) étant de 100 % en poids.

7. Composition de moulage (P) selon l'une quelconque des revendications 1 à 6, comprenant en tant que composant (b) au moins deux copolymères à blocs différents (b_{S1}-1) et (b_{S1}-2) tels que définis ci-après :
(b_{S1}-1) au moins un copolymère à blocs (b_{S1}-1) qui comprend :
au moins un bloc dur H comprenant des motifs répétitifs de monomères vinylaromatiques, de préférence le styrène, et
au moins un bloc mou statistique S₁ comprenant des motifs répétitifs d'au moins un monomère oléfinique monofonctionnel et d'au moins un monomère vinylaromatique, de préférence des motifs répétitifs d'éthylène, d'au moins un monomère oléfinique monofonctionnel ayant 3 à 10 atomes de carbone et de styrène,
les motifs répétitifs des monomères oléfiniques monofonctionnels et des monomères vinylaromatiques étant distribués statistiquement au sein du bloc mou statistique S₁, et
la proportion des motifs répétitifs des monomères vinylaromatiques rapportée à l'ensemble du copolymère à blocs (b_{S1}-1) étant de 60 à 85 % en poids, de préférence de 62 à 85 % en poids, souvent de 65 à 85 % en poids ; et
(b_{S1}-2) au moins un copolymère à blocs (b_{S1}-2) qui comprend :
au moins un bloc dur H comprenant des motifs répétitifs de monomères vinylaromatiques, de préférence le styrène, et
au moins un bloc mou statistique S₁ comprenant des motifs répétitifs d'au moins un monomère oléfinique monofonctionnel et d'au moins un monomère vinylaromatique, de préférence des motifs répétitifs d'éthylène, d'au moins un monomère oléfinique monofonctionnel ayant 3 à 10 atomes de carbone et de styrène,
les motifs répétitifs des monomères oléfiniques monofonctionnels et des monomères vinylaromatiques étant distribués statistiquement au sein du bloc mou statistique S₁, et
la proportion des monomères vinylaromatiques rapportée à l'ensemble du copolymère à blocs (b_{S1}-2) étant de 25 à 59 % en poids, de préférence de 30 à 59 % en poids, souvent de 35 à 59 % en poids.

8. Composition de moulage (P) selon l'une quelconque des revendications 1 à 7, comprenant en tant que composant (b) au moins deux copolymères à blocs différents (b_{S1}-2) et (b_{S2}-1) tels que définis ci-après :
(b_{S1}-2) au moins un copolymère à blocs (b_{S1}-2) qui comprend :
au moins un bloc dur H comprenant des motifs répétitifs de monomères vinylaromatiques, de préférence le styrène, et
au moins un bloc mou statistique S₁ comprenant des motifs répétitifs d'au moins un monomère oléfinique monofonctionnel et d'au moins un monomère vinylaromatique, de préférence des motifs répétitifs d'éthylène, d'au moins un monomère oléfinique monofonctionnel ayant 3 à 10 atomes de carbone et de styrène,
les motifs répétitifs des monomères oléfiniques monofonctionnels et des monomères vinylaromatiques étant distribués statistiquement au sein du bloc mou statistique S₁, et
la proportion des monomères vinylaromatiques rapportée à l'ensemble du copolymère à blocs (b_{S1}-2) étant de 25 à 59 % en poids, de préférence de 30 à 59 % en poids, souvent de 35 à 59 % en poids ; et
(b_{S2}-1) au moins un copolymère à blocs (b_{S2}-1) qui comprend :
au moins un bloc dur H comprenant des motifs répétitifs de monomères vinylaromatiques, de préférence le styrène, et
au moins un bloc mou S₂ comprenant des motifs répétitifs de monomères oléfiniques monofonctionnels, de préférence des motifs répétitifs d'éthylène et d'au moins un monomère oléfinique monofonctionnel ayant 3 à 10 atomes de carbone,
la proportion des motifs répétitifs des monomères vinylaromatiques rapportée à l'ensemble du copolymère à blocs (b_{S2}-1) étant de 60 à 85 % en poids, de préférence de 62 à 85 % en poids, souvent de 65 à 85 % en poids.

9. Composition de moulage (P) selon l'une quelconque des revendications 1 à 8, dans laquelle les valeurs des indices de réfraction du composant copolymère statistique (a) et du composant copolymère à blocs (b) se situent dans la plage de 1,52 à 1,57 à 589,3 nm, déterminées de manière analogue à ASTM C 1648-12.

10. Composition de moulage (P) selon l'une quelconque des revendications 1 à 9, dans laquelle le copolymère à blocs (b_{S1}), le copolymère à blocs (b_{S1}-1) et le copolymère à blocs (b_{S1}-2), respectivement, est un copolymère à blocs linéaire avec deux blocs durs H terminaux et un bloc mou S₁ central.

11. Composition de moulage (P) selon l'une quelconque des revendications 1 à 10, dans laquelle la composition de moulage (P) présente un voile initial déterminé selon ASTM D1003 pour des plaques moulées par injection ayant une épaisseur de 3,2 mm (0,125 in) inférieur à 8 %.

12. Composition de moulage (P) selon l'une quelconque des revendications 1 à 11, dans laquelle la composition de moulage (P) présente une résistance au choc Izod sans entaille déterminée selon ASTM D4812 supérieure à 500 J/m.

13. Procédé de préparation d'une composition de moulage (P) selon l'une quelconque des revendications 1 à 12, dans lequel les composants (a) et (b) et, le cas échéant, les composants (c) et/ou (d) sont mélangés à l'état fondu, de préférence par extrusion.

14. Article façonné produit à partir de la composition de moulage (P) selon l'une quelconque des revendications 1 à 12.

15. Utilisation de la composition de moulage (P) selon l'une quelconque des revendications 1 à 12 ou d'un article façonné selon la revendication 14 pour des articles ménagers et des appareils électroménagers.
